# EUROPEAN PATENT SPECIFICATION

(11) **EP 3 434 103 B1**
(45) Date of publication and mention of the grant of the patent: **12.02.2020**
(21) Application number: 17183050.8
(22) Date of filing: 25.07.2017
(51) Int. Cl.: A01N 37/30

(54) **DAMINOZIDE COMPOSITION**
DAMINOZID ENTHALTENDE ZUSAMMENSETZUNG
COMPOSITION COMPRENANT DU DAMINOZIDE

(43) Date of publication of application: 30.01.2019
(73) Proprietor: Certis Europe B.V., 3605 MA Maarssen (NL)
(72) Inventor: KLOMP, Andéas Joannes Anthonius, 2548 WB Den Haag (NL); RINSMA, Sjouke, 3317 MK Dordrecht (NL)
(74) Representative: McNab, Donald C.

(56) References cited:
- EP-A1- 2 225 940
- WO-A1-99/24007
- WO-A1-2011/109144
- WO-A1-2015/024995

## Description

### FIELD OF THE INVENTION

The present invention relates to a formulation of the plant growth regulator daminozide, in particular an oil dispersion of this substance, a method of preparing such a dispersion, the method involving mixing such dispersions with water to form daminozide-containing oil-in-water emulsions, and a method of applying such emulsions to plants.

### BACKGROUND OF THE INVENTION

Daminozide (CAS Registry Number 1596-84-5) is a well-known plant growth regulator approved for use in at least Europe and the United States. Typically, it is applied to crops, generally flowering and/or ornamental plants by spraying a solution in water. Absorption of daminozide is via permeation of leaf surfaces with subsequent translocation throughout the plant.

Inclusion of daminozide in aqueous solutions can lead to the generation of impurities, the most notable of which are so-called unsymmetrical dimethylhydrazine (1,1-dimethylhydrazine, UDMH, a known oncogen) and N-nitrosodimethylamine (dimethylnitrosamine, NDMA). Daminozide can degrade in water to produce UDMH. Mutagenicity studies *in vitro* and *in vivo* of UDMH have shown that it may generate oxidised derivatives including NDMA after exposure to light and air. NDMA exhibits genotoxic properties after metabolism. Acceptable limits of UDMH and NDMA in formulations are 30 ppm and 2 ppm respectively. Thus, regulatory requirements in Europe mandate maximum levels of UDMH and NDMA of 30 µg/mL and 2.0 µg/mL respectively.

The aqueous environment in which UDMH and NDMA may form typically occurs in aqueous formulations of daminozide, for example when aqueous solutions remain in a mixing tank. Consequentially, daminozide is typically available commercially in the form of dry, water-soluble granules, which are generally tank-mixed with water with prior to application.

Whilst granulated forms of daminozide are useful, liquid presentations of daminozide would be advantageous, for ease of tank-mixing with water, and flexibility of manipulation generally, such as when measuring and transferring. Moreover, it is also advantageous for such products to be available in concentrated form, so as to reduce packing and shipping costs.

Typical concentrated liquid presentations of agrochemical products such as herbicides, pesticides and plant growth regulators are dispersions in oil (ODs), emulsifiable concentrates (ECs) and soluble concentrates (SCs). Because of the desire to exclude aqueous concentrated presentations, and because of the general in solubility of daminozide in hydrophobic solvents, ECs and SCs are formulations not well suited to the provision of a concentrated liquid presentation of daminozide.

WO 2015/024995 A1 (Fine Agrochemicals Limited) describes growth regulator concentrates for use in agriculture, more particularly essentially water-free liquid dispersions comprising at least one growth regulator that is insoluble or unstable in water, an organic hydrophobic carrier and an emulsifier, the purpose of which is stated to be to stabilise the dispersion in the organic carrier and to cause the concentrate to be water-miscible and self-emulsifying when diluted in water.

It is mentioned in WO 2015/024995 A1 that, with respect to dispersions of solids in organic liquids, amongst other presentations, it becomes increasingly difficult to predict whether certain formulations may be suitable for certain actives, the nature of the active ingredients embraced within the broadest scope of what is described in WO 2015/024995 A1 are defined only as being growth regulators having solubility in vegetable oil of about 0.1 wt% or less and being insoluble or unstable in water.

In WO 2015/024995 A1, daminozide is mentioned, once, as a possible growth regulator. However, no evidence is provided that it is within the ability of a skilled person to prepare a daminozide dispersion after reading this publication; its examples relate only to the preparation and use of dispersions of the actives prohexadione calcium and gibberellic acid.

It would be of benefit to the art for there to be an alternative presentation of daminozide, which is neither aqueous nor solid, and is suitable for use, preferably commercial use. The present invention is intended to address this.

### SUMMARY OF THE INVENTION

We have found that, when using systems with only one dispersant, we were unable to satisfactorily maintain dispersions of particulate daminozide in hydrophobic organic media. Surprisingly, however, we found that use of a combination of two different classes of dispersant is effective in allowing formation of a dispersion (i.e. an OD) of daminozide particles in such liquids of useful stability.

The present invention thus provides an alternative presentation of daminozide, suitable for tank- or other mixing with water, offering a useful and technically advantageous alternative to the existing solid and aqueous solution formulations of daminozide available hitherto. This is thus of benefit to the art.

Viewed from a first aspect, therefore, the invention provides a dispersion of particulate daminozide in an aprotic organic liquid, characterised in that the dispersion comprises a dispersant system comprising a poly(hydroxy fatty acid) and an alkylated N-vinylpyrrolidinone polymer.

Viewed from a second aspect, the invention provides a method of preparing a dispersion in accordance with the first aspect of the invention, comprising providing a first population of daminozide particles, having a median particle diameter, and reducing the median particle diameter of the first population to form a second population of daminozide particles.

Viewed from a third aspect, the invention provides a method comprising contacting a dispersion in accordance with the first aspect, or prepared in accordance with the second aspect of the invention, of the invention with water. For example, the method may comprise conducting the method in accordance with the second aspect of the invention and thereafter contacting the resultant dispersion with water.

Viewed from a fourth aspect, the invention provides a mixture comprising water and a dispersion in accordance with the first aspect of the invention, for example a dispersion obtainable in accordance with the second aspect of the invention.

Viewed from a fifth aspect, the invention provides a method comprising applying to a plant the mixture of the fourth aspect of the invention.

Viewed from a sixth aspect, the invention provides the use of a first mixture, which is a mixture in accordance with the fourth aspect of the invention, to regulate plant growth in comparison with plant growth achievable with use of the same volume of a second mixture, the second mixture comprising the same concentration of daminozide as the first mixture system, but made by mixing daminozide granules with water.

Further aspects and embodiments of the present invention will be evident from the discussion that follows below.

### BRIEF DESCRIPTION OF THE DRAWINGS

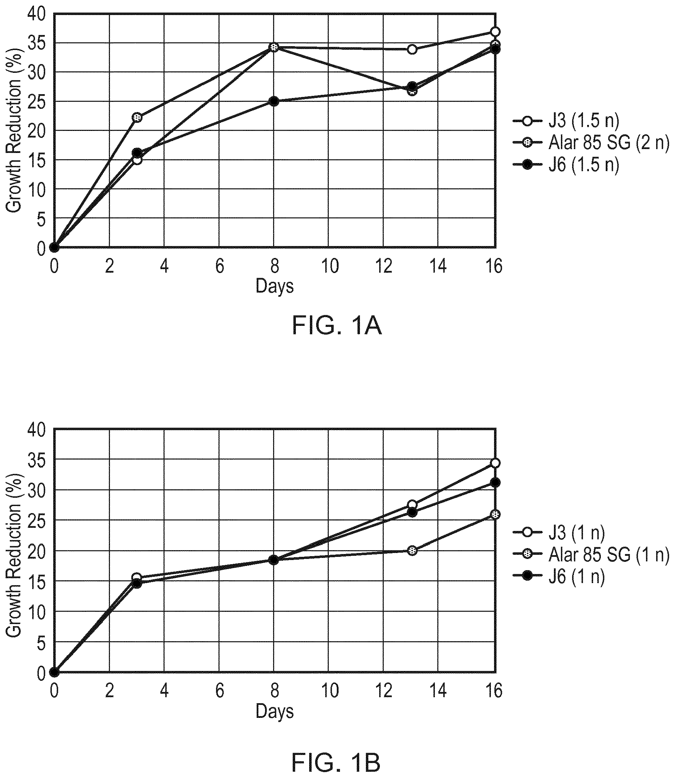

Fig. 1 depicts the % growth retardation effect in glass house tests in which Nicotiana plants were treated with daminozide-containing mixtures in accordance with the present invention (J3 and J6) or a mixture prepared from commercially available Alar 85 SG. Growth rate reduction (%) is reported as a function of concentration of daminozide in spray liquid and as a function of time (number of treatments). Normal dose (1 n) = 1.70 g/l, 1.5 n= 2.55 g/l and 2 n = 3.40 g/l.

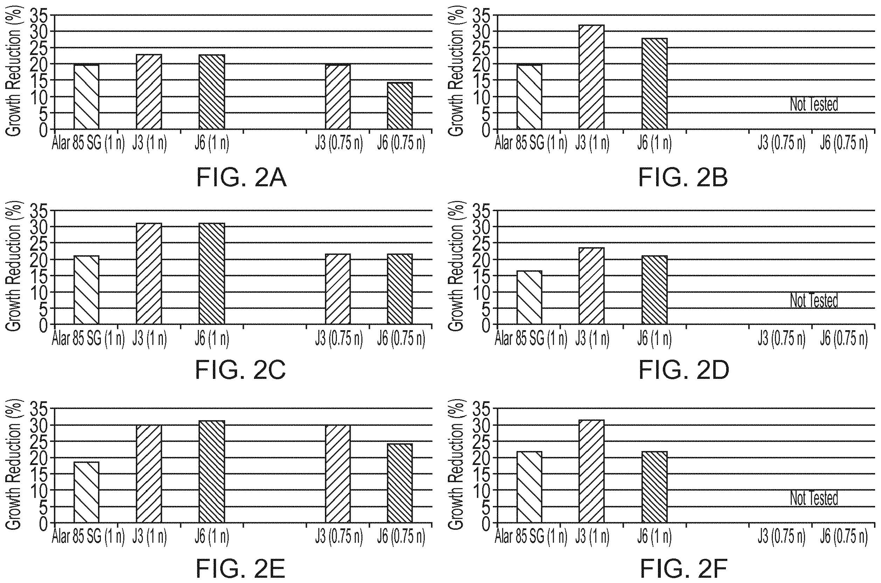

Fig. 2 depicts further growth retardation data from glass house tests showing the result after treatment of various plants (Fig. 2A: Kalanchoe, Fig. 2B: Salvia; Fig. 2C: Nicotiana; Fig. 2D: Tagetes; Fig. 2 E: Pointsetia; and Fig. 2F: Viola) with four applications of daminozide-containing mixtures in accordance with the present invention (either J3 or J6) or of a mixture prepared from commercially available Alar 85 SG. Alar 85 SG was applied at normal dose (1 n (=1.7 g/l)). J3 and J6 were tested at both normal dose and 0.75 x normal dose (1n = 1.7 g/l and 0.75 n = 1.3 g/l respectively).

### DETAILED DESCRIPTION OF THE INVENTION

Any discussion of documents, acts, materials, devices, articles or the like included in the present specification is not to be taken as an admission that any or all of these matters form part of the prior art or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

As used in this specification, the singular forms "a," "an," and "the" include plural referents unless the context expressly indicates to the contrary. Thus, for example, reference to a poly(hydroxy fatty acid) includes a single type of this polymer as well as two types of polymer of this class.

The term "about" herein, particularly with reference to a given quantity, is meant to encompass deviations of plus or minus five percent.

By alkyl is meant herein a saturated hydrocarbyl radical, which may be straight-chain, cyclic or branched. By alkylene is meant an alkyl group from which a hydrogen atom has been formally abstracted. Typically alkyl and alkylene groups will comprise from 1 to 25 carbon atoms, more usually 1 to 10 carbon atoms, more usually still 1 to 6 carbon atoms. The simplest alkylene group is methylene (-CH₂-).

By aryl is meant a radical formed formally by abstraction of one hydrogen atoms from an aromatic moiety. Thus phenyl is the aryl radical corresponding to benzene.

The term fatty acid herein denotes carboxylic acids, generally monocarboxylic acids, which have aliphatic, generally unbranched, side chains, typically comprising between 4 and 28 carbon atoms. Fatty acids, and esters thereof, are widely available.

As is outlined above, the present invention is based on the finding that a specific dispersant system comprising a poly(hydroxy fatty acid) and an alkylated N-vinylpyrrolidinone polymer is particularly efficacious in allowing formation of stable dispersions (i.e. an OD) of daminozide particles. In particular, dispersions of the invention have advantageous physical and chemical stability, for example useful maintenance upon storage of pourability and resistance to creaming, flocculation; and stability towards degradation upon storage as evidenced by maintenance of limits of UDMH and NDMA within the maximum regulatory levels of 30 ppm and 2 ppm respectively for example by maintaining concentrations of UDMH and NDMA within the these limits upon 12 weeks' storage at 35 °C and/or upon 8 weeks' storage at 40 °C.

The dispersions of the invention comprise a suspension of daminozide particles in an aprotic organic liquid. By dispersion is meant that at least 80 wt%, typically ≥ 90 wt% and more typically ≥ 95 wt% of the daminozide is suspended (i.e. not dissolved) in the organic liquid, i.e. the continuous phase of the dispersion.

Aprotic denotes a compound not containing readily dissociable hydrogen ions. The skilled person fully understands what is meant by the term aprotic organic liquids in the context of agricultural formulations, the term excluding from its scope compounds with acidic hydrogen atoms, even weakly acidic hydrogen atoms such as those found in alcohols and amines.

The dispersions of the invention are non-aqueous, i.e. essentially free of water. Essentially free of water denotes herein a concentration of water of less than about 2.0 wt% (with respect to the weight of the dispersion), more typically less than about 1.0 wt%, still more typically less than about 0.5 wt%. Desirably, the concentration of water in the non-aqueous liquid is as little as practicable, for example less than about 0.2 wt%, less than about 0.1 wt% or less than about 0.02 wt%. Water concentration may be measured by volumetric Karl Fischer titration, in accordance with ASTM E203-16.

The aprotic organic liquid acts as a liquid carrier for the other components that are present in the dispersion of the invention. It is to be understood that, herein, liquid denotes a substance that is liquid at standard atmospheric pressure and at 20 °C. It will also be understood that the aprotic organic liquid within the dispersions of the invention may comprise one or more substances (i.e. more than one type of aprotic organic liquid).

Typically, the dispersions of the invention comprise an aprotic organic liquid in an amount of between about 30 and about 85 wt%, based on the weight of the dispersion. More typically, the dispersion comprises from about 40 to about 80 wt% aprotic organic liquid, for example between about 45 and about 60 wt% aprotic organic liquid. Generally, because it is anticipated that commercial use of the dispersions of the invention will involve their transport to and/or storage at a place other than where they are prepared, it is likely to be generally advantageous for the amount of aprotic organic liquid to be minimised. It will be understood that, where more than one aprotic organic liquid is present in the dispersions, the quantities of liquid described herein refer to the total amount of aprotic organic liquids present in the dispersions.

Typically, the aprotic organic liquid in the dispersions of the invention comprises one or more of the following liquids:
fatty acid esters, which may be natural (i.e. non-synthetic) compounds, for example natural oils such as animal or vegetable oils, or synthetic compounds;
alkyl-substituted or unsubstituted hydrocarbons, for example aromatic hydrocarbons such as mono- or polyalkyl-substituted benzenes or naphthalenes, such as toluene, xylenes, mesitylene, ethylbenzene, 1-methylnaphthalene, 2-methylnaphthalene or dimethylnaphthalene, including derivatives of aromatic hydrocarbons such as indane or 1,2,3,4-tetrahydronaphthalene (which may each be regarded as a dialkyl substituted benzene, in which the dialkyl substituents of adjacent carbon atoms are connected to form a 1,3-pentylene and 1,4-butylene group respectively), or mixtures thereof; or aliphatic hydrocarbons, for example straight-chain or branched aliphatic, often C₅₋₁₀hydrocarbons, or cyclic, optionally alkyl-substituted aliphatic, often C₅₋₁₀hydrocarbons, or mixtures thereof; mixtures of one or more aromatic hydrocarbons and one or more aliphatic hydrocarbons;
halogenated hydrocarbons, for example halogenated aromatic and/or aliphatic hydrocarbons, such as chlorobenzene or dichloromethane and
aprotic polar solvents, such as ethers; esters of C₁₋₁₀mono-, di- or tri-carboxylic acids, for example selected from amongst C₁₋₁₈alcohols; phosphoric acid esters; amides; nitriles; and sulfones.

The aprotic organic liquid may thus be or comprise a compound selected from the list consisting of linear or branched C₆₋₁₆alkanes, for example hexane, heptane, octane, nonane, decane, undecane, dodecane, tridecane, tetradecane, pentadecane, hexadecane, branched chain isomers thereof and mixtures thereof; aromatic or cycloaliphatic solvents, which may be unsubstituted or substituted with one or more alkyl or halo substituents; C₇₋₁₈-containing mono- or polyalkyl-substituted benzenes, or naphthalenes; liquid triglycerides or mixtures comprising liquid triglycerides, for example vegetable oils such as olive oil, kapok oil, castor oil, papaya oil, camellia oil. palm oil, sesame oil, corn oil, rice bran oil, peanut oil, walnut oil, coconut oil, cotton seed oil, soybean oil, rapeseed oil, linseed oil. tung oil, sunflower oil, safflower oil; liquid esters of C₁₋₁₂monoalcohols or C₁₋₁₂polyols (e.g. C₁₋₁₂diols), for example butanol, *n*-octanol, *i*-octanol, dodecanol, cyclopentanol, cyclohexanol, cyclooctanol, ethylene glycol, propylene glycol or benzyl alcohol with aliphatic C₂₋₁₀ carboxylic or aliphatic C₂₋₁₀polycarboxylic acids (e.g. aliphatic C₂₋₁₀dioic acids), such as caproic acid, capric acid, caprylic acid, pelargonic acid, succinic acid and glutaric acid; or with aromatic carboxylic acids such as benzoic acid, toluic acid, salicylic acid and phthalic acid; liquid transesters (i.e. transesterification products) of vegetable oils (including those vegetable oils mentioned immediately hereinbefore), e.g. alkyl esters of vegetable oils (including those vegetable oils mentioned immediately hereinbefore), such as rapeseed oil methyl ester or rapeseed oil ethyl ester.

Esters which can thus be used in the dispersions of the invention are, for example, benzyl acetate, caproic acid ethyl ester, isobornyl acetate, pelargonic acid ethyl ester, benzoic acid methyl or ethyl ester, salicylic acid methyl, propyl, or butyl ester, diesters of phthalic acid with saturated aliphatic or alicyclic C₁₋₁₂alcohols, such as phthalic acid dimethyl ester, dibutyl ester, diisooctyl ester; liquid amides of C₁₋₃alkylamines with C₆₋₈carboxylic acids, or mixtures thereof.

Typically, the aprotic organic liquid present in the dispersions of the present invention is or comprises a fatty acid ester or transesterification product thereof, or an aromatic or aliphatic hydrocarbon. Often, the aprotic organic liquid is or comprises a vegetable oil or a transester thereof, particularly with a C₁₋₄alcohol, or a mixture of one or more vegetable oils, one or more vegetable oil C₁₋₄alkyl transesters, or a mixture of one or more vegetable oils and one or more vegetable oil C₁₋₄alkyl transesters. For example, and according to particular embodiments of the invention, the dispersions may comprise a mixture of a, e.g. one, vegetable oil and a, e.g. one, vegetable oil C₁₋₄alkyl transester.

Often the aprotic organic liquid is a, or comprises at least one, fatty acid ester. Of particular use in the present invention are fatty acid esters of C₁₀₋₂₂fatty acids, e.g. C₁₂₋₂₀fatty acids, which may be saturated or unsaturated.

Many fatty acid esters are naturally available, found in animal oils (i.e. oils of an animal origin) and in vegetable oils (i.e. oils (or components thereof, such as triglycerides) extracted from oleaginous plant species, for example from the seeds, fruit or germs thereof). Of vegetable oils, corn oil, sunflower oil, soybean oil and rapeseed oil are particularly widely available commercially, and thereby useful in part for this reason in the context of the present invention).

Animal and vegetable oils, particularly vegetable oils, may thus constitute the aprotic organic liquid, in particular embodiments of the first aspect of invention. In other embodiments, the liquid may be or comprise a product obtained from transesterification of naturally available fatty acid esters, for example a transesterified vegetable oil. Often transesterification involves reaction of natural fatty acid esters, typically triglycerides (i.e. triesters of glycerol and three fatty acids) with C₁₋₂₀alcohols (often C₁₋₄alcohols, for example methanol and ethanol). For example, alkyl esters, such as rapeseed oil methyl or ethyl esters, may be used as the polar aprotic liquid in accordance with the present invention.

It will be understood that any given aprotic organic liquid will have a particular viscosity at any given temperature and it will be within the normal ability of the skilled person to select aprotic organic liquids, or mixtures thereof, having appropriate viscosity profiles for use as the continuous phase in dispersions of the present invention. For example, liquids of greater viscosity will tend to afford a lesser extent of particle sedimentation (which is generally desirable); whereas liquids of lower viscosity will tend to be easier to manipulate (e.g. pour, siphon etc) and to make it easier to disperse the daminozide particles. An appropriate balance of these properties will be sought by those formulating the dispersions, and may often be achieved by using a mixture of liquids. It is out of such considerations that, according to specific embodiments of the present invention, we have found a mixture of corn oil and methylated rapeseed oil (i.e. rapeseed oil methyl ester) to be useful. Similarly, a mixture of corn oil and rapeseed oil ethyl ester is useful. It will be recognised, however, that many other aprotic organic liquids, and combinations thereof, will be useful in accordance with the invention.

A characteristic feature of the dispersions of the present invention is that they comprise a dispersant system comprising an alkylated N-vinylpyrrolidinone polymer and a poly(hydroxy fatty acid).

By alkylated N-vinylpyrrolidinone polymer herein is meant a copolymer of an N-vinyl pyrrolidone and a monoalkene. Typically the N-vinyl pyrrolidone is an N-vinyl-2-pyrrolidone. Generally the N-vinyl pyrrolidone is not substituted. However, alkyl (e.g. C₁₋₆alkyl-substituted) N-vinyl pyrrolidones (e.g. N-vinyl-2-pyrrolidones) may also be copolymerised with monoalkenes to form N-vinylpyrrolidinone polymers, comprising one or more alkyl groups pendant from the pyrrolidinone ring. Where a C₁₋₆alkyl substituent is present, typically only one substituent is present, at either the three positions available within the pyrrolidinone ring, for example at the 3-, 4- or 5- position in N-vinyl-2-pyrrolidone.

Generally the N-vinyl-2-pyrrolidone is N-vinyl-2-pyrrolidone itself (i.e. absent any substitution of the three carbon atom chain linking the nitrogen atom and carbonyl group in N-vinyl 2-pyrrolidone).

The other component from which the copolymer is made, the monoalkene, is typically a C₁₀₋₂₀ alkene, generally a straight-chain C₄₋₂₀ alkene, for example a straight-chain C₁₀₋₂₀ alkene and more generally still a 1-alkene, i.e. where the double bond is terminal. Examples include 1-butene and 1-hexadecene.

The stoichiometric proportions of the N-vinyl pyrrolidone and monoalkene from which the alkylated N-vinylpyrrolidinone polymers are made are typically from about 5:95 to about 50:50 (N-vinyl pyrrolidone: monoalkene), for example from about 10:90 to about 40:60 (N-vinyl pyrrolidone: monoalkene), such as from about 20:80 to about 30:70 (N-vinyl pyrrolidone: monoalkene). Typically such copolymers will have Hydrophile-Lipophile Balance (HLB) values between about 3 and about 8. According to particular embodiments of the invention copolymers will have HLB values between about 3 and about 6. According to these and other embodiments of the invention, the dispersant system will have an overall HLB value of less than 5.

The HLB system or index is well known to those skilled in the art. (see for example in A. W. Adamson, Physical Chemistry of Surfaces, John Wiley and Sons (1982)). HLB values are generally indicated in a product's technical information and thus readily available.

The HLB system is based on the nature and size of the hydrophobic and hydrophilic parts of a surfactant molecule and thus indicates, qualitatively, the polarity of the surfactant molecule: increasing HLB indicates increasing hydrophilicity, e.g., increasing potential for the surfactant molecules present in an oil-water interface to penetrate deeper into the water phase.

The HLB value of dispersants and dispersant systems can be determined by calculating the mass-weighted average HLB of the mixture. Thus the HLB value of the mixture equals the sum calculated by adding the product of the weight fraction of each constituent multiplied by the HLB of the constituent.

It will be understood from the foregoing discussion about HLB values that the HLB value of a first alkylated N-vinylpyrrolidinone copolymer will generally be *smaller* than a second copolymer made with the same molar proportions of N-vinyl 2-pyrrolidone and alkene but where the second alkene is *smaller* (because of the relatively smaller contribution to the HLB of the resultant copolymer made by the alkene).

Using a *smaller* proportion of that smaller alkene will typically afford a third alkylated N-vinylpyrrolidinone copolymer having an HLB value between that of the first and second copolymers. Similar considerations apply when using different N-vinyl pyrrolidones (for example alkyl-substituted N-vinylpyrrolidinones). Should the increased lipophilicity of alkyl-substituted N-vinylpyrrolidinones (vis-à-vis the corresponding unsubstituted N-vinylpyrrolidinone) decrease, relatively, the contribution of the N-vinylpyrrolidinones to the size of the HLB value of the copolymer, this influence can be lessened by using *more* of the N-vinyl pyrrolidone, use of which will typically contribute to a higher HLB value, on a stoichiometric basis, than the monoalkene.

In other words, the skilled person can, without undue burden, prepare suitable a variety of alkylated N-vinylpyrrolidinone copolymers from a variety of monoalkenes and a variety of N-vinyl 2-pyrrolidones. That said, suitable alkylated N-vinylpyrrolidinone polymers for use in accordance with the present invention are readily available commercially. Examples, which may be used according to particular embodiments of the present invention, include products sold under the trade names Agrimer AL 22 (a 20:80 copolymer of N-vinyl 2-pyrrolidone and 1-hexadecene) and Agrimer AL 30 (a 30:70 copolymer of N-vinyl 2-pyrrolidone and 1-eicosene).

According to particular embodiments of the invention, there is provided a dispersion of particulate daminozide in an aprotic organic liquid, characterised in that the dispersion comprises a dispersant system comprising a poly(hydroxy fatty acid) and Agrimer AL 22.

By poly(hydroxy fatty acid) is meant herein a polymer of one or more monohydroxy monocarboxylic fatty acids, monohydroxy monocarboxylic fatty acids denoting fatty acids comprising one carboxylic acid and a side chain bearing one hydroxyl group. The poly(hydroxy fatty acid)s are thus polyesters. Typically, but not necessarily, the poly(hydroxy fatty acid) is a polymer of one monohydroxy monocarboxylic fatty acid, i.e. is a homopolymer.

Typically the poly(hydroxyfatty acid) is a polymer of a C₁₂₋₂₆monohydroxy carboxylic acid, often a C₁₄₋₂₀monohydroxy carboxylic acid, e.g. a C₁₈monohydroxy carboxylic acid, which may be either saturated or unsaturated. Examples of these acids include saturated examples, such as hydroxylauric acid (for example 12-hydroxydodecanoic acid), hydroxymyristic acid (for example 3-hydroxy tetradecanoic acid), hydroxypalmitic acid (for example 16-hydroxy hexadecanoic acid) and hydroxystearic acid (for example 12-hydroxyoctadecanoic acid); and unsaturated examples, such as ricinoleic acid. According to particular embodiments of the invention, the poly(hydroxy fatty acid) is a polymer of 12-hydroxyoctadecanoic acid or ricinoleic acid. According to more specific embodiments of the invention, the poly(hydroxy fatty acid) is a polymer of 12-hydroxyoctadecanoic acid. According to still more specific embodiments of the invention, the poly(hydroxyfatty acid) is a homopolymer of 12-hydroxyoctadecanoic acid.

It is to be understood that the poly(hydroxyfatty acid)s, including the polymers according to the particular specific and still more specific embodiments of the invention defined immediately hereinbefore, may be polymers comprising a non-hydroxy fatty acid unit at one terminus. It will be understood that "non-hydroxy fatty acid" denotes a fatty acid absent a hydroxyl group. Such non-hydroxy fatty acid-derived termini will typically, but need not necessarily, be derived from C₁₂₋₂₆monocarboxylic acids, often C₁₄₋₂₀monocarboxylic acids, e.g. C₁₈monocarboxylic acids, which may be either saturated or unsaturated. An example of a non-hydroxy fatty acid-terminated poly(hydroxyfatty acid) is poly(12-hydroxyoctadecanoic acid) octadecanoate, sometimes referred to as 12-hydroxyoctadecanoic acid homopolymer, octadecanoate. This substance is commercially available under the trade name Atlox LP1.

According to particular embodiments of the invention, there is provided a dispersion of particulate daminozide in an aprotic organic liquid, characterised in that the dispersion comprises a dispersant system comprising Atlox LP1 and an alkylated N-vinylpyrrolidinone polymer.

According to other particular embodiments of the invention, there is provided a dispersion of particulate daminozide in an aprotic organic liquid, characterised in that the dispersion comprises a dispersant system comprising Atlox LP1 and Agrimer AL 22.

Although the following discussion, including the experimental section below, focuses on the use of Atlox LP1 and Agrimer AL 22, it will be understood from the foregoing discussion that, whilst use of such a combination of dispersants is of particular utility in accordance with the present invention, it is not to be understood that such a dispersant system is in any way mandatory. On the contrary, each illustration of the invention hereinafter with use of the Atlox LP1 / Agrimer AL 22 combination (including the examples set forth) should be construed as capable of modification (i.e. by substitution) with other dispersant systems unless the context explicitly implies to the contrary.

In the dispersant systems of the invention, the weights of the poly(hydroxyfatty acid) and alkylated N-vinylpyrrolidinone copolymers components respectively will typically be present in a ratio of between about 1:5 to about 5:1. Some dispersions of the invention will comprise weights of these components in a ratio of between about 1:3.5 to about 3.5:1, often about 1:2 to about 2.5:1, for example between about 2:3 to about 3:2. Examples of weight ratios (poly(hydroxyfatty acid) : alkylated N-vinylpyrrolidinone) are: 4:6, 3:5, 3:7 and 3:11. The most appropriate ratio of the components of the dispersant system can be determined by routine experimentation, so as to optimise the dispersion (deflocculation) of the daminozide particles and to minimise creaming (upon standing) of the resultant dispersion. Typically, creaming manifests itself by division of sediment into a heavier dark-cream lower layer and a lighter light-cream upper layer.

Some dispersions of the invention will comprise approximately equal weights of both components, i.e. a ratio of about 1, i.e. 1.05:1 to 1:1.05.

Typically the combined weights of the poly(hydroxyfatty acid) and alkylated N-vinylpyrrolidinone copolymer components of the dispersant system will comprise between about 0.5 to about 10%, for example between about 1 and about 5%, of the total weight of the dispersions of the invention.

It will be understood by those skilled in the art that the components of the dispersant system within the dispersions of the present invention (i.e. the poly(hydroxy fatty acid) and alkylated N-vinylpyrrolidinone copolymer components) will be capable of functioning, at least to an extent, as emulsifiers upon mixing of the dispersions of the present invention with aqueous liquids (e.g. water), as well as stabilising the dispersions, i.e. conferring advantageously slow rates of sedimentation upon storage and/or agitation.

Notwithstanding any inherent emulsifying functionality that may be possessed by the components of the dispersant system, however, particular dispersions of the present invention comprise one or more further emulsifiers (i.e. one or more emulsifiers which are neither poly(hydroxy fatty acid)s nor alkylated N-vinylpyrrolidinone polymers). Thus, in the discussion that follows, references to emulsifiers (some of which refer to the term "emulsifier system") denote those optional components of the dispersions additional to the poly(hydroxyfatty acid) and alkylated N-vinylpyrrolidinone copolymer components. These emulsifiers may be anionic, cationic or non-anionic surfactants.

Where present, which is generally the case, the total weight of such emulsifiers (exclusive of the combined weight of the poly(hydroxyfatty acid) and alkylated N-vinylpyrrolidinone copolymer in the dispersion) will typically be between about 5 and about 30%, for example between about 10 and about 25%, on a weight basis with respect to the total weight of the dispersion.

Suitable non-ionic surfactants for use as emulsifiers include, but are not limited to:
polyalkoxylated (generally polyethoxylated or polypropyloxylated, most often polyethoxylated) saturated and unsaturated C₈₋₂₄aliphatic alcohols, generally derived from the corresponding fatty acids or from petrochemical products, and generally having (if polyethoxylated) between 1 and 100, often between 1 and 50, ethylene oxide units (EO), it being possible for the free hydroxyl group to be alkoxylated. These are widely available commercially, for example, as members of the Genapol® X series (for example Genapol® X030, X050, X060, X080, X090, X100 and X150) and Genapol® O series (Clariant), Crovol® M series (Croda) or as Lutensol® series (BASF);
polyalkoxylated, generally polyethoxylated, arylalkylphenols, such as, for example, 2,4,6-*tris*(1-phenylethyl)phenol (tristyrylphenol), generally having (if polyethoxylated) an average degree of ethoxylation of between 10 and 40, such as, for example, Soprophor® BSU (Rhodia) or HOE S 3474 (Clariant);
polyalkoxylated, generally polyethoxylated, alkylphenols having one or more alkyl radicals, such as, for example, nonylphenol or tri-sec-butylphenol, and (if polyethoxylated) a degree of ethoxylation of between 2 and 40, preferably from 4 to 15, such as, for example, Arkopal® N series or Sapogenat® T series (Clariant);
polyalkoxylated, preferably polyethoxylated, hydroxyfatty acids or glycerides which contain hydroxyfatty acids, such as, for example, ricininc or castor oil, having (if polyethoxylated) a degree of ethoxylation of between 10 and 80, preferably from 25 to 40, such as, for example, the Emulsogen® EL series (Clariant) or the Agnique® CSO series (Cognis);
polyalkoxylated, generally polyethoxylated, sorbitan or sorbitol esters, such as, for example, Atplus® 309 F (Uniqema), the Alkamuls® series (Rhodia), Arlatone™ TV, Atlas™ G 1086 and G-1096, Atlox™ 1045A, Cirrasol™ G-1086, and Cirrasol™ G-1096 (all Croda) and Toximul® SEE-340 and SEE-341 (Stepan);
polyalkoxylated, generally polyethoxylated, amines, such as, for example, Genamin® series (Clariant), Imbentin® CAM series (Kolb) or Lutensol® FA series (BASF); di- and tri-block copolymers, for example from alkylene oxides, for example from ethylene oxide and propylene oxide, having average molar masses between 200 and 10 000, preferably from 1000 to 4000 g/mol, the proportion by mass of the polyethoxylated block varying between 10 and 80%, such as, for example, the Genapol® PF series (Clariant), the Pluronic® series (BASF), or the Synperonic® PE series (Uniqema).

Suitable ionic surfactants for use as emulsifiers include, but are not limited to:
alkali and alkaline earth metal salts of alkylarylsulfonic acids having a straight-chain (more common) or branched (less common) alkyl chain, such as Rhodacal™ 70/B (a mixture of linear dodecylbenzensulfonic acid, calcium salt and isobutyl alcohol, Rhodia), phenyl sulfonate CA or phenylsulfonate CAL (Clariant), Atlox® 3377BM and 3300B (Croda), or the Empiphos® TM series (Huntsman);
polyalkoxylated, generally polyethoxylated, ionically modified surfactants, which are, for example ionically modified by converting the terminal free hydroxyl group of the polyethylene oxide block into a sulfate or phosphate ester (for example as alkali metal and alkaline earth metal salts), such as, for example, Genapol® LRO or dispersant 3618 (Clariant), Emulphor® (BASF) or CrafoJ® AP (Cognis); and
polyelectrolytes, such as lignosulfonates, condensates of naphthalenesulfonate and formaldehyde, polystyrenesulfonate or sulfonated unsaturated or aromatic polymers (polystyrenes, polybutadienes or polyterpenes), such as the Tamol® series (BASF), Morwet® D425 (Witco), the Kraftsperse® series (Westvaco) or the Borresperse series (Borregard).

Emulsifiers of particular note in connection with the practice of the present invention include:
(a) polyethoxylated sorbitans, esterified with fatty acids (for example Arlatone™ TV, Atlas™ G-1096 and Atlas™ G-1086);
(b) polyethylene glycol monoalkyl ethers, sometimes known as fatty alcohol ethoxylates (fatty alcohols denoting (analogously to fatty acids) alcohols, generally monohydric alcohols, comprising aliphatic, generally unbranched side chains, which may be saturated or unsaturated, of between 4 and 28 carbon atoms, for example C₁₀₋₂₂fatty alcohols such as C₁₂₋₂₀fatty alcohols), for example Genapol® X-080 and other members of the Genapol® X series of compounds;
(c) salts, e.g. alkali or alkaline earth metal salts, of alkylarylsulfonic acids having a straight (more common) or branched (less common) alkyl chain, such as Rhodacal™ 70/B;
(d) polyoxyethylene phosphates, such as Rhodafac MB (Rhodia); and
(e) dioctyl sodium sulfosuccinate (sodium *bis*(2-ethylhexyl) sulfosuccinate), commercially available as Aerosol® OT-75.

According to some embodiments of the invention, the dispersions comprise an emulsifier system comprising one or more emulsifiers belonging to groups (a) to (e) set forth above.

According to more specific embodiments, the dispersions comprise an emulsifier system comprising two or more, for example two or three emulsifiers belonging to groups (a) to (e) set forth above.

According to more specific embodiments, the dispersions comprise an emulsifier system comprising two emulsifiers belonging to groups (a) to (e) set forth above, one selected from group (a) and one selected from group (d), for example Arlatone™ TV and Rhodafac MB; Atlas™ G-1096 and Rhodafac MB or Atlas™ G-1086 and Rhodafac MB.

According to other embodiments, dispersions may comprise an emulsifier system comprising three emulsifiers belonging to groups (a) to (e) set forth above, one selected from group (a) one selected from group (b) and a third selected from group (c) or group (d). Examples of such embodiments include emulsifier systems comprising Arlatone™ TV, Atlas™ G-1096 or Atlas™ G-1086, often Arlatone™ TV; and/or a member of the Genapol® X series of compounds, for example Genapol® X-080. According to particular embodiments, emulsifier systems may comprise Arlatone™ TV, Genapol® X-080 and either Rhodafac MB or Rhodacal™ 70/B.

There is no particular limitation to the nature of the emulsifiers that may be included in the dispersions of the invention. These can be cationic, anionic or non-ionic, but are typically anionic or non-ionic. As discussed above, we have found that combinations of emulsifiers, for example two or three emulsifiers, can sometimes be convenient. When formulating a dispersion of the invention comprising one or more emulsifiers, what is sought is a product that will afford an emulsion when mixed with, for example added to, water (for example in accordance with a method of the third aspect of the invention) without destabilising the dispersion of daminozide. Such formulations can be arrived at by routine experimentation by those of normal skill in the art.

In other words, what is desirable is the ability to provide an emulsion, preferably a homogeneous emulsion, as a particular embodiment of the fourth aspect of the invention, with as little flocculation of the dispersion prior to that, and as little creaming afterwards, as possible.

As is known by those skilled in the art, flocculation is a process by which the dispersed phase in dispersions agglomerates, through contact and adhesion, whereby the particles of a dispersion form larger-sized clusters. As is also known, creaming arises from a separation of the emulsion into two emulsions, one of which (the cream) is a greater concentration of the dispersed phase than the other. Creaming is the primary mechanism by which the dispersed phase separates from an emulsion. It is typically the precursor to coalescence.

It will be understood that the skilled person is capable of supplementing dispersions of the present invention with one or more emulsifiers by routine experimentation. For example, ratios of emulsifiers may be selected in order to tailor the HLB of the emulsifier system to a desired value, for example between about 8 and about 16, for example between about 9 and about 15 are between about 8 and about 13, an HLB of 10 denoting a system equally hydrophilic and hydrophobic.

As well as supplementing the dispersions of the present invention with the emulsifier system described above, it can be advantageous to include an additional surfactant for the purpose of stabilising the emulsions formed upon mixture of the dispersions of the invention with aqueous material, for example water. We refer to such surfactants herein as emulsion stabilisers. Their use can be advantageous because, although dispersions of the present invention are relatively insensitive to normal fluctuations in ambient temperature, hard water can increase creaming of the dispersions of the invention when seeking to prepare emulsions. We have found that this effect can be ameliorated, if desired, by the use of emulsion stabilisers.

We have found that effective emulsion stabilisers are nonionic surfactants which are mono C₂₋₆alkyl ethers of polyC₂₋₄alkylene oxide block copolymers having at least a first polyalkylene oxide block region and a second polyalkylene oxide block region in which the polyalkylene oxide in the first region is different to that in the second region. Generally, the C₂₋₆alkyl ether portion is a C₃₋₅alkyl ether, often a butyl ether. Also generally, the alkylene oxide block copolymer portion is an ethylene oxide/propylene oxide block copolymer. The ethylene oxide portion typically represents from about 10 to about 90 mol%, for example from about 25 to about 75 mol%, of the block copolymer. An example of this type of surfactant is available under the trade name Ethylan NS-500LQ (HLB value: 14.1), available from Akzo Nobel.

Where present, emulsion stabilisers may be included in the dispersions of the invention in an amount of between about 0.1 to about 5%, with respect to the total weight of the dispersion.

Often, the dispersions of the present invention will comprise at least one additive to reduce settling of the daminozide particles within the dispersion on storage. However, it will be understood that this practice, whilst useful, is (like incorporation of an emulsifier system and an emulsion stabiliser) optional, particularly if the dispersions of the invention are used shortly after their preparation. Such additives are generally referred to as thickeners (or thickening agents, rheology modifiers or suspending agents, which terms may be regarded as interchangeable). Thickeners act by increasing the viscosity of the continuous liquid medium (i.e. the aprotic organic liquid) in which the particular daminozide is dispersed, thereby reducing the tendency of the daminozide particles towards settling and the formation of a separated, compact sediment upon storage.

It is intuitive that, as yield stress increases, for example with increasing concentration of thickener(s), viscosity tends to decrease (because the dispersion becomes thicker). It will thus be understood that the skilled person will be able to modify the amount of thickener(s), if present in the dispersions of the invention, so as to balance these two competing properties.

When a thickener is present is the dispersions of the invention, it is (or they are: it will be understood that one or more thickener may be used) typically included in a total amount at least 0.1%, more typically at least about 0.5%, of the total weight of the dispersion. Generally thickeners constitute no more than about 5% of the total weight of the dispersions, more typically no more than about 4% of the dispersion by weight. Typical concentrations are between about 0.5 and about 5 wt%, often between about 1.0 and about 3.0 wt%.

Thickeners are well known in the field of ODs. Often, thickeners are silicas or silicates, which may be naturally occurring, synthetic, or organically modified.

Silicas include synthetic precipitated silicas (i.e. those prepared by precipitation from a silicate solution) or fumed silicas (silica generally prepared by a pyrolytic process). Silicas may be chemically modified. Such modifications include organic modifications (whereby to prepare organically modified clays), for example by reaction with dimethyldichlorosilane, to increase hydrophobicity. Silicas useful in accordance with the present invention are widely available commercially under a variety of trade names (for example SIPERNAT and AEROSIL (Evonik Industries), CAB-O-SIL (Cabot)). An example of a hydrophobic fumed silica treated with dimethyldichlorosilane is AEROSIL R972 (Evonik Industries).

Silicates include phyllosilicate minerals present in naturally occurring clays, such as kaolinite and smectites (for example montmorillonite, hectorite, saponite and vermiculite). Clays comprising minerals of the smectite group can generally be organically chemically modified by cation exchange of metal ions with organic salts such as quaternary ammonium salts to increase hydrophobicity. Natural and modified clays are commercially available under a variety of trade names (for example BENTONE (Elementis), BARDEN clay (Kentucky Tennessee Clay Co.), ATTAGEL (BASF) and MIN-U-GEL (Active Minerals)). Organic chemical modification of clays through surface treatment with quaternary ammonium salts can render them more effective for use as thickeners in accordance with the present invention.

According to specific embodiments of the invention, dispersions of the invention comprise a mixture of a silica and a clay, often a mixture of an organically modified, generally fumed, silica and an organically modified clay. Within such compositions the clay (e.g. organically modified clay) may, for example be present in an amount of between about 0.1 and about 2.5% and the silica (e.g. organically modified silica) present in an amount of between about 0.1 and about 2.5 %, for example between about 0.5 and about 1.5%, these amounts being weight percentages with respect to the total weight of the dispersion. We exemplify such a combination of thickeners herein, and the amounts of thickener immediately hereinbefore described, with the use of the commercially available products Bentone 1000, Aerosil 200 and Aerosil R972 and it will thus be understood that this particular combination of thickeners is applicable to other dispersions (i.e. other than those specifically exemplified). However, it will be understood that the use of this combination of thickeners is merely illustrative, a wide variety of thickeners being available commercially.

As well as the components, both mandatory and optional, already discussed in detail herein, it will be understood that the dispersion of the invention may comprise additional plant growth regulator(s), although this is generally not the case.

Additionally, the dispersions may comprise one or more additional co-formulants, such as drying aids, antioxidants, colourants, antimicrobicidal agents (e.g. one or more fungicidal bactericidal or algicidal agents), antifoaming agents, corrosion inhibitors, fragrances and antifreeze agents, often one or more additional drying aids, antioxidants, colourants or antimicrobicidal agents (e.g. one or more fungicidal bactericidal or algicidal agents). The skilled person is well acquainted with the use of such components in agricultural formulations. See, for example, the Compendium of Herbicide Adjuvants, 12th edition, and Illinois University, 2014.

Often the dispersions will comprise 1 or more, generally 1, drying aid (sometimes referred to as water scavengers), typically at a concentration of between about 0.5 and about 5.0 wt%; and 1 or more, generally 1, antioxidant, typically at a concentration of between about 0.1 and about 5.0 wt%.

Examples of suitable drying aids include molecular sieves (for example 3 Å molecular sieves), anhydrous calcium chloride and magnesium sulfate. Such components may be regarded as components of the dispersions of the invention even although these may not necessarily be dispersed within the aprotic organic liquid.

Examples of suitable antioxidants include vitamin E and sterically hindered phenols {for example 2,6-di-*tert*-butylphenol, 2,6-di-*tert*-butyl-1-hydroxy-4-methylbenzene (also known as butylated hydroxytoluene (BHT), 3,5-di-*tert*-butyl-4-hydroxytoluene, methyl-di-*tert*-butylphenol and 2,6-di-*tert*-butyl-*para*-cresol), butylated hydroxyanisole (BHA, a mixture of 2- and 3-*tert*-butyl-4-methoxyphenol, also known as BOA, *tert*-butyl-4-hydroxyanisole, (1,1-dimethylethyl)-4-methoxyphenol, *tert*-butyl-4-methoxyphenol, antioxyne B, and various trade names), *tetrakis*[methylene(3,5-di-*tert-*butyl-4-hydroxyhydrocinnamate)] methane, 2,2'-methylene *bis*-(4-methyl-6-*tert-*butylphenol), *N,N'*-1,6-hexamethylene-*bis*-3-(3,5-di-*tert*-butyl-4-hydroxyphenyl)propionamide and *tert*-butylhydroquinone (also known as TBHQ or 2-(1,1-Dimethylethyl)-1,4-benzenediol)}.

From the foregoing discussion, it will be understood that the dispersions of the invention, as well as comprising daminozide, an aprotic organic liquid, a poly(hydroxy fatty acid) and an alkylated N-vinylpyrrolidinone polymer, they may optionally comprise one or more of, typically all of: an emulsifier system, an emulsion stabiliser and a thickener, as well as the one or more additional co-formulants referred to above. Put alternatively, the dispersions of the invention may be regarded as consisting essentially of daminozide, an aprotic organic liquid, a poly(hydroxy fatty acid), an alkylated N-vinylpyrrolidinone polymer, and optionally an emulsifier system, an emulsion stabiliser a thickener, a drying aid and an antioxidant. By consisting essentially of in this context is meant that the dispersions may comprise additional components (for example colourants, antifoaming agents, corrosion inhibitors, fragrances, antifreeze agents and antimicrobicidal agents), but that these components will not materially affect the chemical and physical stability characteristic of the dispersions described herein. In this respect, an example of a component that will materially affect the essential characteristics of the dispersions described herein is a material quantity of water or other protic solvent.

A dispersion of the present invention may be prepared by combining its components and reducing, if necessary, the particle size of the insoluble components (for example and indeed generally that of the daminozide), for example in accordance with the method of the second aspect of the invention. For example, the median particle diameter of course daminozide may be reduced either in the presence or in the absence of the aprotic organic liquid.

As is known, the particle size of insoluble components in an oil dispersion is generally inversely proportionate to the stability of the dispersion. Smaller particle sizes (or more accurately particulate material of smaller median particle diameter) tend therefore to be preferred to particulate material of generally larger size. Smaller particle sizes also facilitate formation of emulsions upon mixture with aqueous media (e.g. water). As will be understood, there will be a distribution of particle sizes within any particular sample. Generally, the size of at least 90% of the particles, by number (sometimes referred to as the D90), within the dispersions of the invention, will be less than 50 µm, often less than 15 µm, for example less than 10 µm. According to particular embodiments, the size of at least 50% of the particles, by number (sometimes referred to as the number median or D50) is less than 5 µm, for example less than 3.5 µm or less than 2.5 µm. All particle sizes and particle size distributions described herein (for example D50s and D90s) may be as measured using a Malvern Mastersizer 2000 laser particle sizer.

A variety of methods for achieving desirable particle size distributions of insoluble components in, or for use in, oil dispersions are known in the art. These include ball-milling, bead-milling, sand-milling, colloid-milling and air-milling combined with high-speed blending. Ball-, bead- and sand-mills are media mills that achieve size reduction of particles by vigorous agitation with grinding media (e.g., balls or beads made of glass or ceramic, or sand). Generally, in ball mills, the container rotates, whilst in bead or sand mills, grinding is achieved by an impeller in the grinding media. In horizontal bead mills, agitation is achieved by the action of an internal agitator rapidly rotating along the axis of the milling chamber. Colloid mills achieve size reduction of particles by passing the material to be ground through a narrow gap of a rapidly rotating rotor-stator assembly. Ball-milling, bead-milling, sand-milling and colloid-milling are wet-milling processes (i.e. in the presence of a liquid carrier). Air-milling is suitable for dry powders which may then be combined with liquid components and blended, typically using high-speed blenders, often using high-speed impellers or dispersators (i.e. rotor-stators).

Generally the insoluble components within the dispersions of the invention will be daminozide particles and particles of the thickener system. Typically thickeners will be available in ready-to-use particulate form. Nevertheless, thickeners may improve the efficiency of a "wet-milling" process (i.e. wherein the size of daminozide particles is reduced in the presence of aprotic organic liquid, as opposed to reducing the size of daminozide particles in the absence of such liquid, for example a "dry-milling" process such as air-milling.

Daminozide is typically available in powdered crystalline form. Particles may be either reduced to an appropriate size distribution (*vide supra*) by ball-milling before mixing with the other components of the dispersions, or course daminozide (having D50 distributions of between about 50 and about 200 µm) may be contacted with the aprotic organic liquid of the dispersion and the particle size of the course daminozide reduced within such mixtures, typically by a combination of colloid milling and bead milling. Representative milling procedures are set out in the examples.

Although the dispersions of the invention can be applied directly to plants, they will be diluted with water (optionally in the presence of other components) prior to use, and the resultant mixtures, typically emulsions, applied to plants, typically as a foliar spray. Appropriate degrees of dilution may be determined by the skilled person. Typically the dispersions of the invention will be mixed with water in dispersion : water ratios of 1:50 to 1:1000, more typically 1:100 to 1:500.

It will be understood that, if it is desired for mixtures of the fourth aspect of the invention to comprise materials other than the mandatory components of the dispersions of the invention and water (for example materials such as additional plant growth regulators, antimicrobial agents or otherwise), these may be included in the dispersions of the invention or in the water with which the dispersions of the invention are mixed or the mixing process in accordance with the third aspect of the invention may comprise mixing of a dispersion of the invention, water, and one or more of these additional materials. It will be understood, however, that typically an emulsifier system, emulsion stabiliser and thickener will be present in the dispersion used in accordance with the method of the third aspect of the invention.

It will also be understood that emulsions generally form spontaneously upon mixture of dispersions of the present invention (typically comprising an emulsifier system) and water. However, it will be recognised that agitations of the receptacle within which mixture takes place may assist in formation of an emulsion (for example by stirring, inversion of the mixture.

The daminozide formulations described herein - generally the mixtures of the fourth aspect of the invention, which it will be understood are typically (and preferably) emulsions - may be applied (in accordance with embodiments of the fifth aspect of the invention) to plants, indoors or outdoors, typically non-food crops such as a variety of perennial and annual ornamentals and bedding and pot plants, for example chrysanthemums, hydrangeas, azaleas, poinsettias and gardenias. Its use modifies the stem length and shape of ornamental and other plants. It may be used to control growth of seedlings in plug flats. Food crop use includes the control of vegetative and reproductive growth of orchard crops such as apples, cherries, nectarines, peaches, prunes, and pears. In addition, daminozide use enhances shorter and more erect peanut vines. Other minor uses of daminozide include: brussel sprouts (California), cantaloupes (California and Arizona), grapes, and tomatoes.

For optimal efficacy, the spray mixture is generally applied to foliage. One skilled in the art can readily determine the optimal amount of spray mixture to apply based on the daminozide concentration in the dispersion, the dilution ratio of the dispersion with water, the nature and growth stage of the plants to which it is to be applied, and environmental conditions. Often the spray mixture is applied in an amount of between 50 and 1000 L/ha, for example between 100 and 600 L/ha. Typically, the amount of daminozide will be applied as a field spray per year ranges from about 0.1 to about 1.0 g/m², for example 0.1 to about 0.8 g/m².

A particular advantage of the invention is that application of the daminozide-containing emulsions described herein provides for distribution on plants' leaves of daminozide dispersed within small oil droplets after evaporation of the water. This is in contradistinction to the provision of solid (powdered) daminozide adhered to leaves of plants after evaporation of water from aqueous solutions prepared by mixing of daminozide granules with water. This is advantageous because oil droplets tend to allow for more effective foliar absorption by plants, via penetration of leaves' waxy surface. Additionally, an enhanced performance can be achieved by the presence of the oil carrier and surfactants present.

Because of these advantages, application of a mixture in accordance with the fourth aspect of the invention to plants is more effective for regulating plant growth than a corresponding mixture obtained by diluting daminozide granules with water and applying that mixture to plants. Such uses are those to which the sixth aspect of the invention is directed, daminozide granules denoting non-liquid water-soluble daminozide granules available commercially intended for mixture with water prior to application.

By daminozide granules or water-soluble daminozide granules is meant herein a formulation of the SG type, as described, for example, in the "Catalogue of pesticide formulation types and international coding system", Technical Monograph No: 2, 7th Ed., March 2017, CropLife International, with which the skilled person is familiar.

As noted elsewhere herein, it will generally be desirable for the particulate daminozide within the dispersions of the present invention to be present in the greatest concentration possible, subject to achieving a balance between sedimentation, ability to manipulate and ability to disperse in the continuous phase. Typically, the dispersions of the invention will comprise between about 50 g and about 350 g daminozide per litre of dispersion, often between about 100 g and about 300 g daminozide per litre of dispersion. For example, dispersions comprising between about 150 g and about 275 g daminozide per litre of dispersion, e.g. about 250 g daminozide per litre of dispersion will be typical.

The non-limiting examples below more fully illustrate the embodiments of this invention.

### EXPERIMENTAL SECTION

### Single dispersant systems:

A. Corn oil and methylated rapeseed oil (MRSO) were selected as oils for dispersion screening. The former is more viscous than the latter, so investigating both products offered the possibility to manipulate formulation rheology through oil selection; higher viscosity may reduce particle size sedimentation rate; lower viscosity may improve pourability and dispersibility. A variety of dispersants was screened for efficacy of dispersing daminozide in corn oil and MRSO (see Tables A1 and A2). Consequently, 2 g of dispersant was weighed into 18 g of corn oil or MRSO in a 50 ml Winchester glass bottle. Samples were allowed to mix on a roller at ambient temperature for 24 hours to ensure dissolution. Thereafter, the solutions were added dropwise to 5 g of daminozide powder with a particle size of > 150 microns. The samples were then left to stand at ambient temperature overnight and the amount of sedimentation was measured. According to the results in Tables A1 and A2, rapid sedimentation of daminozide in all samples A1-A14 was observed, owing to the presence of coarse and heavy particles of daminozide in the mixture. Importantly, samples A3, A4, A6, and A9 showed no change in viscosity and were selected as good candidates for dispersing daminozide. These employed the dispersants Agrimer AL 22, Zephrym PD 2206, Atlox LP-1 in Corn oil and Atlox 4912 in MRSO.
B. In further tests, it was decided to prepare larger batches of the above-mentioned single dispersant systems that showed no change in viscosity. Additionally, the particle size of single dispersant system were further reduced to approximately 100 microns by colloid milling to allow for easier dispersion and slower rate of sedimentation of daminozide in the single dispersant system. Subsequently, 250 g batches of dispersant systems in corn oil or MRSO were prepared according to the composition presented in Table B. Each batch was colloid milled at a speed of 9000 rpm. The dispersions were seen to change from a bright orange colour to a milky cream colour. The milled dispersions were left to stand for 48 hours before differences in sedimentation of daminozide were observed. According to the results in Table B, the single dispersant systems showed no trend in percent of separation but, on analyzing the samples in close detail, it was observed that all dispersant systems apart from batch B4 had a soft, single-layered sediment. Advantageously, the single dispersant system B4 differed from the other systems in that its sediment had divided into a dark-cream lower layer, which was hard and compact in texture, and a light-cream upper layer that was soft in texture. This difference suggested that the dispersant system B4 comprising Agrimer AL22 was more effective in dispersing daminozide particles enough to allow for the desired slow rate of sedimentation.
C. In further tests, it was decided to progress with the single dispersant system B4 and further mill daminozide particles to a particle size of approximately 2.5 microns on average using a bead mill filled with a known mass of glass beads (1.0-1.5 mm). This reduction in average particle size would further encourage dispersion of milled daminozide particles and reduce sedimentation rates. Consequently, 250 g batches consisting of 66.6 wt% corn oil or MRSO, 3 wt% dispersant and 30.3 wt% daminozide were prepared. Subsequently, 0.1 wt% Aerosil 200 was added to the systems to aid in keeping milled daminozide particles in suspension. During Eiger bead milling the dispersed daminozide particles were agitated under high shear at 4500 rpm for up to 3 minutes in a grinding chamber. The milling process was continued until the particle size of daminozide was reduced to less than 2.5 µm (D50, Malvern Mastersizer 2000 laser particle sizer). The dispersions were seen to gradually change colour from yellow to cream, as the particle size decreased. Once the target particle size was reached, photomicrographs (Olympus BX40 microscope) of the various mill-bases were taken to assess for flocculation and viscosity was judged by eye. According to the results in Table C, single dispersant systems C2 and C4 revealed rapid flocculation in both systems with MRSO, whereas the flocculation was slow in the single dispersant systems C1, C3, C5 with corn oil. Uneven distribution of particles with visible gaps under microscopic examination confirmed slight flocculation. This was typical for all the single dispersant systems investigated. Surprisingly, Agrimer AL22 showed again best performance for dispersing milled daminozide particles in samples C1 and C2, despite the fact that the target of achieving a complete non-flocculated system had not been achieved. Samples C3 and C5 became too viscous.

### Dual dispersant systems

D. In further tests, Agrimer AL22 was tested in combination with other dispersants, since no single dispersant system had given a completely unflocculated dispersion. Consequently, dual dispersant system D1 was prepared by mixing a bead milled solution of daminozide in corn oil with Atlox LP1 and Agrimer AL22 (Table D). Similar dual dispersant systems were obtained by blending two single dispersant systems together as described above (D2= C2+C3, D3= C3+C4 and D4= C1+C2). Surprisingly, microscopic evaluation of the resultant blends of dispersants showed that each of these dual dispersant systems, expect D1, showed flocculation. Dual dispersant system D1 employed a combination of Agrimer AL22 and Atlox LP. Agrimer AL 22 alone or in combination with Zephrym PD 7000 did not completely deflocculate daminozide (see Table D).
E. In further tests, dual dispersant E1 with 3 wt% Agrimer AL22 and 3 wt% Atlox LP-1 was prepared in a similar way as dual dispersant system D1. Moreover, additional dual dispersant systems with different ratios of Agrimer AL22 and Atlox LP-1 were obtained by adding an additional amount of Atlox LP1 to sample E1 (Table E). Subsequently, these dual dispersant systems were viewed under the microscope to assess the rate of flocculation and viscosity was judged by eye. Dual dispersant systems E1, E2 and E3 were all pourable and as with D1, appeared deflocculated from the microscopic appearance. Dual dispersant system E4, on the other hand, appeared slightly flocculated under the microscope and had a higher viscosity, also an indication of flocculation. Advantageously, the results in Table E show that the dual dispersant system with a ratio of Agrimer AL22 : Atlox LP-1 in between 0.5 and 2.5 was found to be a very suitable system to achieve a stable dispersion.

### Dual dispersant systems with single emulsifiers

F. A number of candidate emulsifiers covering a range of HLBs > 7 were selected to determine if they are good emulsifiers for corn oil. These emulsifiers were Atlas G1086 (HLB 10), Atlas G1096 (HLB 11), Arlaton TV (HLB 10), Rhodacal 70/B (HLB 8), Aerosil OT-100 (HLB 12), Aerosil OT-75 (HLB 12, Rhodafac MB (HLB 9.2), Span 20 (HLB 8.6), Genapol X080 (HLB 7). Consequently, various dual dispersant systems with 1 emulsifier were prepared as follows: 100 g batches of dual dispersant system with Agrimer AL22 and Atlox LP-1 were prepared by weighing 80 wt% millbase X1 (see Table X) and 20 wt% emulsifier into a small Winchester (Table F). In addition, a small amount of Aerosil 200 was added to reduce the rate of sedimentation of milled daminozide particles. Millbase X1 (see Table X) was first colloid milled then Eiger milled as described in Sections B-C. The dual dispersant systems were incubated at 60 °C for 1 hour to aid dissolution, then cooled to ambient temperature before spontaneity of emulsification and emulsion stability were recorded. Subsequently, 2% dilutions were prepared by injecting 2 ml of each solution into 100 ml cylinder of deionised water (DI water). This was followed by 10 inversions of the cylinder. The spontaneity of emulsification was recorded and the emulsion stability was observed at ambient temperature as function of time. Immediately at start of the emulsification process, all samples showed poor initial bloom and it was observed that on injection, approximately 95% of the emulsion began to sink to the bottom of the cylinder whilst approximately 5% remained suspended. However, after 10 inversions, a uniform, fine white homogeneous emulsion was formed and differences in creaming were observed in the various dual dispersant systems F1-9. Advantageously, the least amount of creaming was seen in dual dispersant system F1, F2 and F3 (no foam, milky white), followed by F9 (10 ml, grey) and F4-F8 (30-40 ml, grey), 30 minutes after last immersion of the test samples. 90 minutes later, the foam height in samples F4-F8 was further reduced to 10-20 ml. Even more advantageously, the least amount of creaming after 2 hours was seen in dual dispersant systems F2, F5, F6 and F7, indicating a reasonable emulsification. These dual dispersant systems employed the emulsifiers Atlas G1096, Aerosil OT-75, Aerosil OT-100 and Rhodafac MB.

### Dual dispersant systems with multiple emulsifiers

G. An efficacious emulsifier system for an OD formulation should emulsify the oil when the product is added to water and not destabilize the dispersion of the solid in the formulation itself. Ideally, a homogenous emulsion is seen with no creaming or flocculation. For that reason, various dual dispersant systems were employed with multiple emulsifiers that gave reasonable emulsification of the dual dispersant system when applied alone (see section I, 2% dilution in DI water). The dual dispersions system with multiple emulsifiers were obtained as follows: 50 gram batches were prepared by weighing samples into a small Winchesters and gently stirring at 60 °C until homogenous mixtures were formed. Subsequently, the dispersibility, and quality of the emulsion, both initially and after 24 hours, were recorded for the following emulsifier mixtures: S1 (Atlas G1096 and Rhodafac MB) S2 (Atlas G1096 and Aerosil OT 75) and S3 (Atlas G1096, Aerosil OT 75 and Rhodafac MB). The 2% dilutions in DI water were prepared as described in Sections B-C. According to the data in Table G, none of the dual dispersant system with emulsifier mixtures S1, S2 or S3 had complete emulsion stability: all dual dispersion systems G had separated into an oil and/or cream layer.
H. Further investigation of other combinations of emulsifier systems with 3 way combinations of Genapol X080, Arlatone TV, Rhodafac MB and/or Rhodacal 70/B were carried out. Additionally, the total emulsifier content was increased and, more importantly, the HLB of the combined systems was kept within the ideal HLB range of 9.2 - 12.0. Consequently, the dual dispersant system were obtained by mixing the emulsifiers and Millbase X1 in 50 g Winchesters, followed by gentle stirring of the mixture at 60 °C until homogenous mixtures were formed. Subsequently, the quality of the emulsion, both initially and after 24 hours, were recorded for the follow emulsifier mixtures: S1 (Atlas G1096 and Rhodafac MB), S4 (Atlas G1096, Genapol X080 and Rhodacal 70/B), S5 (Genapol X080 and Rhodacal 70/B), S6 (Genapol X080, Arlatone TV and Rhodafac MB) and S7 (Genapol X080, Arlatone TV and Rhodacal 70/B). According to the data in Table H, none of the emulsion mixtures gave complete emulsion stability after 24 hours in DI water (both temperatures). Advantageously, the dual dispersant systems H3 and H7, H8, H9 and H10 showed the least separation and these dispersant systems contained the emulsifying mixtures S4, S6 or S7.

### Dual dispersant systems with multiple emulsifiers and a stabilizer

I. Previous results showed that emulsifier systems with the least creaming and colour change employed emulsifier combinations S4, S6 or S7. Advantageously, Ethylan NS 500 was included in the emulsifier mixture to further stabilize the emulsion stability properties of the dual dispersant systems. In that respect, preference was given to using S6, as it gave a slightly slower rate of separation during the emulsification tests in comparison with the other two combinations. Consequently, various dual dispersant systems with the emulsion stabilizer were prepared as described in section G. The emulsion stabilities of these dual dispersant systems were observed by preparing 2% dilutions in DI water at ambient temperature for the following two emulsifier systems: S7 (Genapol X080, Arlatone TV Rhodafac MB and Ethylan NS 500) and S8 (Arlatone TV, Rhodafac MB, Ethylan NS 500 (Table I, samples I1 and I2). In addition, dual dispersant system I3 was prepared by addition of MRSO (25%) and emulsifier system S8 into millbase X1 (see Table X). Subsequently, the emulsion stabilities of the 3 dual dispersant systems were observed after preparation of 2% dilutions in DI water at ambient temperature. Advantageously, dual dispersion system I1 showed only 1 ml separation compared to 3 ml with of dual dispersion system H8, after 24 hours storage at ambient temperature (Tables H and I), indicating a beneficial effect of Ethylan NS 500 on dispersion stability. Moreover, microscopic analysis revealed that dual dispersion system I2 had, on average, a larger proportion of smaller emulsion droplets than I1 (pictures not shown). This suggested that emulsifier system S8 was more efficacious in keeping the oil well dispersed in water than emulsifier system S7. Even more advantageously, the combination corn oil + MRSO in dual dispersion system I3 gave better initial bloom compared to dual dispersions systems from corn oil as the only solvent. The effect on emulsion stability appeared to be negligible as I3 gave 3% cream separation after 60 hours. This result compared well to the emulsifier system employed in 12, which showed 1% creaming after 24 hours.

### Stabilizing dual dispersant systems with organically modified clay and fumed silica:

J. Further investigations were made with dual dispersant systems comprising multiple emulsifier system S8 in combination with organically modified clay and fumed silica. Organically modified clays alter the structure of the oil dispersion by providing sturdy framework or 'house of cards' structure. This structure affects the rheology of the dispersion by increasing the yield stress. Yield stress determines how well the thickener system inhibits the technical form settling in the oil. Fumed silicas have silanol groups that interact with each other to build a three dimensional network, which is important in maintaining the viscosity of the oil dispersion and helps to maintain yield stress. Consequently, 4 and 2 kg batches of millbase X2 and X3 respectively, were prepared both containing Bentone 1000 were firstly colloid milled at 9000 rpm over a total time of 15 minutes and then Eiger milled for 2-3 hours using 1.0 - 1.5 mm beads to give a d(50) of 2-3 microns (Table X). The millbases were then divided into known amounts and Aerosil R972 (0.3, 0.6 and 1.0 %) was post added to the final dual dispersant systems as previously described by high shear blending (Table J). The rheology of the formulations was studied using an Anton Paar controlled stress, cone and plate rheometer. In aqueous suspensions, a good dispersion of solid particles approximately 2 micron in size typically has a Casson yield of order 1000-3000 mPa, whilst for pourability, viscosity @ 100 sec⁻¹ should be below about 250 mPas. Viscosity measurements showed that additions of 1% wt Aerosil R972 and 0.15 wt% Bentone 1000 thickened millbase X3 (MRSO/corn oil solvent blend) to 200 mPas @ 100 sec⁻¹ thus ensuring good pourability. Whilst a blend of 1% wt of Aerosil R972 and 0.3 wt% Bentone 1000 thickened millbase X2 to approximately 350 mPas@ 100 sec⁻¹, judging by eye, at this viscosity good pourability was maintained (Table X). Cason yield data showed that both millbases reacted similarly to addition of the two thickeners. Additions of Bentone 1000 alone resulted in a sharp increase in yield in both millbases thus suggesting that it was effective in providing a sturdy framework in the oil dispersion to encourage suspension of milled daminozide particles. Advantageously, mixtures of Bentone 1000 and Aerosil R972 sustained good yield values when Aerosil R972 was present at concentrations greater than 0.6 wt%. Even more advantageously, 1 wt% Aerosil R972 allowed for a useful yield of 1500 mPa.s for both variations of millbases (Table J). These effects on rheology suggested that a combination of 0.15 wt% Bentone 1000 and 1% Aerosil R972 for millbase 2 (sample J3) and 0.27 wt% of Bentone 1000 and 1 wt% Aerosil R972 for millbase 3 (sample J6) would be most advantageous in maintaining suspension of milled particles of daminozide on storage.

### Storage stability of dual dispersant systems

K. Pilot scaled batches of dual dispersant systems J3 and J6 were incubated for 2 weeks at 54°C to test for changes in physical and chemical properties of the formulations. Simple observations showed that both dual dispersant systems J3 and J6 had slight but acceptable amounts of separation. The water content in the dual dispersant systems J3 and J6 were 0.4 and 0.2 wt % respectively. This content was unchanged after the accelerated storage test (Table K1). In addition, the formulations remained easily pourable and, although some colour changes were observed, samples J3 and J6 enriched with some molecular sieve 3A or anhydrous calcium chloride revealed no colour change Advantageously, also a minor increase of the levels of UDMH and NDMA in the dual dispersant systems J3 and J6 were measured after 2 weeks of storage at 54 °C and the content of both impurities remained below the regulatory maxima of 30 ppm and 2 ppm respectively (Table K2).

### Glass-house tests with dual dispersant systems

L. Various glass-house tests were carried out with both dual dispersant systems J3 and J6 and a commercial product (Alar 85 SG) to measure the growth rate reduction performance. The dual dispersions systems and the commercial products were applied on the follow crops: Nicotiana, Tagetes, Pointsetia, Viola, Savia and Kalanchoe. During the tests, the plant growth reduction was measured per crop as a function of the concentration of daminozide in the spray solution. Additionally, the growth rate performance was followed as a function of time. The height of the crop was on average 6 cm at start of the test (day 0). Subsequently, 4 applications with a dose of 0.1 liter per m² were carried out directly after measuring the plant height with an interval of 3-5 days during a period of 16-18 days in total. Per variety of crop, 3 replicated tests were conducted per application dose. Each replicated test consists of 10 crops. The concentration of daminozide in the spray solution was 1.7 gram daminozide per liter (= normal dose (n)) and depending on the type of formulation (OD of SG), tests were done with normal dose, 0.5x normal dose, 0,75x normal dose, 1.5x normal dose and 2x normal dose (0.5 n, 0.75 n etc). Consequently, the application dose of daminozide in the spray liquid varied between 0.85 and 3.40 gram daminozide per liter. Advantageously, data in Fig. 1 show that application of both the dual dispersant system J3 and J6 caused a substantially better reduction in growth throughout the entire treatment cycle of the crop Nicotiana compared to the commercial product Alar 85 SG. Even more advantageously, when applying the dual dispersion systems J3 or J6 approximately 20-30% less daminozide in the spray solution was needed to obtain the same effect in growth reduction for the crops Nicotiana, Kalanchoe and Pointsetia compared to the commercial product Alar 85 SG (Fig. 2).

**Table A1 Single dispersant system in corn oil: dispersibility of daminozide powder**

| **Samples** | **A1** | **A2** | **A3** | **A4** | **A5** | **A6** | **A7** |
|---|---|---|---|---|---|---|---|
| Corn oil | 78.3 | 72.0 | 72.0 | 72.0 | 72.0 | 72.0 | 72.0 |
| MRSO | | | | | | | |
| Atlox 4912 | | 8.0 | | | | | |
| Agrimer AL22 | | | 8.0 | | | | |
| Zephrym PD2206 | | | | 8.0 | | | |
| Atlox 4914 | | | | | 8.0 | | |
| Atlox LP-1 | | | | | | 8.0 | |
| Soprophor TS 10 | | | | | | | 8.0 |
| Daminozide Tech | 21.7 | 20.0 | 20.0 | 20.0 | 20.0 | 20.0 | 20.0 |
| **Sum (wt** %) | **100.0** | **100.0** | **100.0** | **100.0** | **100.0** | **100.0** | **100.0** |
| Sedimentation rate | RS | RS | RS | RS | RS | RS | RS |
| Viscosity | NC | I | NC | NC | I | NC | I |

| | | | | | | | |
|---|---|---|---|---|---|---|---|
| RS = Rapid Sedimentation, NC = no change of viscosity, I = Increase of viscosity | | | | | | | |

**Table A2 Single dispersant system in MRSO: dispersibility of daminozide powder**

| **Samples** | **A8** | **A9** | **A10** | **A11** | **A12** | **A13** | **A14** |
|---|---|---|---|---|---|---|---|
| Corn oil | | | | | | | |
| MRSO | 78.3 | 72.0 | 72.0 | 72.0 | 72.0 | 72.0 | 72.0 |
| Atlox 4912 | | 8.0 | | | | | |
| Agrimer AL22 | | | 8.0 | | | | |
| Zephrym PD2206 | | | | 8.0 | | | |
| Atlox 4914 | | | | | 8.0 | | |
| Atlox LP-1 | | | | | | 8.0 | |
| Soprophor TS 10 | | | | | | | 8.0 |
| Daminozide Tech | 21.7 | 20.0 | 20.0 | 20.0 | 20.0 | 20.0 | 20.0 |
| **Sum (wt %)** | **100.0** | **100.0** | **100.0** | **100.0** | **100.0** | **100.0** | **100.0** |
| Sedimentation rate | RS | RS | RS | RS | RS | RS | RS |
| Viscosity | I | NC | I | I | I | I | I |

| | | | | | | | |
|---|---|---|---|---|---|---|---|
| RS = Rapid Sedimentation, NC = no change of viscosity, I = Increase of viscosity | | | | | | | |

**Table B Single dispersant system in MRSO and corn oil: dispersibility of daminozide particles after colloid milling**

| **Samples** | C1 | C2 | C3 | C4 | C5 |
|---|---|---|---|---|---|
| Corn oil | 66.6 | | 66.6 | | 66.6 |
| MRSO | | 66.6 | | 66.6 | |
| Agrimer AL22 | 3.0 | 3.0 | | | |
| Zephrym PD2206 | | | 3.0 | 3.0 | |
| Atlox LP-1 | | | | | 3.0 |
| Aerosil 200 | 0.1 | 0.1 | 0.1 | 0.1 | 0.1 |
| Daminozide Tech | 30.3 | 30.3 | 30.3 | 30.3 | 30.3 |
| **Sum (wt %)** | 100.0 | 100.0 | 100.0 | 100.0 | 100,0 |
| Nature of sediment | SS-L | SS-L | SS-L | TL | SS-L |
| % sediment | 60 | 60 | 66 | 52 | 73 |
| Pourability after eiger milling | P | P | V/P | P | V/NP |
| Flocculation | SSF | RF | SSF | RF | SSF |

| | | | | | |
|---|---|---|---|---|---|
| SS-L = Soft Single layered sediment, TL= two layered sediment P = pourable, V/P = viscous but pourable V/NP= viscous and not pourable SSF = slight/slow flocculated, RF = rapid flocculation | | | | | |

**Table C Single dispersant system in MRSO and corn oil: dispersibility of bead-milled daminozide particles**

| **Samples** | C1 | C2 | C3 | C4 | C5 |
|---|---|---|---|---|---|
| Corn oil | 66.6 | | 66.6 | | 66.6 |
| MRSO | | 66.6 | | 66.6 | |
| Agrimer AL22 | 3.0 | 3.0 | | | |
| Zephrym PD2206 | | | 3.0 | 3.0 | |
| Atlox LP-1 | | | | | 3.0 |
| Aerosil 200 | 0.1 | 0.1 | 0.1 | 0.1 | 0.1 |
| Daminozide Tech | 30.3 | 30.3 | 30.3 | 30.3 | 30.3 |
| **Sum (wt %)** | 100.0 | 100.0 | 100.0 | 100.0 | 100.0 |
| Nature of sediment | SS-L | SS-L | SS-L | TL | SS-L |
| % sediment | 60 | 60 | 66 | 52 | 73 |
| Pourability after eiger milling | P | P | V/P | P | V/NP |
| Flocculation | SSF | RF | SSF | RF | SSF |

| | | | | | |
|---|---|---|---|---|---|
| SS-L = Soft Single layered sediment, TL= two layered sediment P = pourable, V/P = viscous but pourable V/NP= viscous and not pourable SSF = slight/slow flocculated, RF = rapid flocculation | | | | | |

**Table D Flocculation of daminozide sub micron particles in single dispersant system in MRSO and corn oil**

| **Samples** | **D1** | **D2** | **D3** | **D4** |
|---|---|---|---|---|
| Corn oil | 62.0 | | 33.3 | 33.3 |
| MRSO | | 66.6 | 33.3 | 33.3 |
| Agrimer AL22 | 5.8 | 1.5 | 1.5 | 3.0 |
| Zephrym PD2206 | | 1.5 | 1.5 | |
| Atlox LP-1 | 4.0 | | | |
| Aerosil 200 | | 0.1 | 0.1 | 0.1 |
| Daminozide Tech | **28.2** | **30.3** | **30.3** | **30.3** |
| **Sum (wt %)** | **100.0** | **100.0** | **100.0** | **100.0** |
| Flocculation | NF | F | F | F |

| | | | | |
|---|---|---|---|---|
| F= flocculation, NF = no flocculation | | | | |

**Table E Dual dispersant systems in corn oil with variable Atlox LP-1 content: effect on flocculation and viscosity**

| **Samples** | **E1** | **E2** | **E3** | **E4** |
|---|---|---|---|---|
| Corn oil | 64.5 | 63.3 | 61.9 | 59.3 |
| Agrimer AL22 | 3.0 | 2.9 | 2.9 | 2.8 |
| Atlox LP-1 | 3.0 | 4.9 | 6.9 | 10.8 |
| Aerosil 200 | 0.1 | 0.1 | 0.1 | 0.1 |
| Daminozide Tech | 29.4 | 28.8 | 28.2 | 27.0 |
| **Sum (wt %)** | **100.0** | **100.0** | **100.0** | **100.0** |
| Flocculation | SSF | SSF | SSF | F |
| Viscosity | P | P | P | IV |

| | | | | |
|---|---|---|---|---|
| SSF= slight/slow flocculation F = flocculation, P = pourable, IV = increased viscosity | | | | |

**Table F Dual dispersant systems in corn oil with Agrimer AL22 and Atlox LP-1 in combination with a single emulsifier: effect on dilution stability.**

| **Samples** | **F1** | **F2** | **F3** | **F4** | **F5** | **F6** | **F7** | **F8** | **F9** |
|---|---|---|---|---|---|---|---|---|---|
| Corn oil | 50.6 | 50.6 | 50.6 | 50.6 | 50.6 | 50.6 | 50.6 | 50.6 | 50.6 |
| Agrimer AL22 | 2.4 | 2.4 | 2.4 | 2.4 | 2.4 | 2.4 | 2.4 | 2.4 | 2.4 |
| Atlox LP-1 | 2.4 | 2.4 | 2.4 | 2.4 | 2.4 | 2.4 | 2.4 | 2.4 | 2.4 |
| Aerosil 200 | 0.1 | 0.1 | 0.1 | 0.1 | 0.1 | 0.1 | 0.1 | 0.1 | 0.1 |
| Daminozide | 24.6 | 24.6 | 24.6 | 24.6 | 24.6 | 24.6 | 24.6 | 24.6 | 24.6 |
| Atlas G1086 | 20.0 | | | | | | | | |
| Atlas G1096 | | 20.0 | | | | | | | |
| Arlatone TV | | | 20.0 | | | | | | |
| Rhodacal 70/B | | | | 20.0 | | | | | |
| Aerosil OT-100 | | | | | 20.0 | | | | |
| Aerosil OT-75 | | | | | | 20.0 | | | |
| Rhodafac MB | | | | | | | 20.0 | | |
| Span 20 | | | | | | | | 20.0 | |
| Genapol X030 | | | | | | | | | 20.0 |
| **Sum (wt %)** | 100.0 | 100.0 | 100.0 | 100.0 | 100.0 | 100.0 | 100.0 | 100.0 | 100.0 |
| Initial dilution stability | PB FW | PB FW | PB FW | PB FW | PB FW | PB FW | PB FW | PB FW | PB FW |
| Separation after 30 minutes | 0.5 ml C | NS | 1 ml C | 1 ml C | NS | NS | NS | 0.5 ml C | 1 ml C |
| Separation after 120 minutes | 1 ml C | NS | 2 ml C | 1 ml C | NS | NS | NS | 0.5 ml C | 2 ml C |

| | | | | | | | | | |
|---|---|---|---|---|---|---|---|---|---|
| PB FW = poor initial bloom, fine white emulsion, NS = no separation, C = creamy layer | | | | | | | | | |

**Table G Dual dispersant systems in corn oil with Agrimer AL22 and Atlox LP-1 in combination with a 2 or 3 way emulsifier systems: effect on dilution stability**

| **Samples** | **G1** | **G2** | **G3** | **G4** | **G5** |
|---|---|---|---|---|---|
| Corn oil | 50.6 | 50.6 | 50.6 | 50.6 | 50.6 |
| Agrimer AL22 | 2.4 | 2.4 | 2.4 | 2.4 | 2.4 |
| Atlox LP-1 | 2.4 | 2.4 | 2.4 | 2.4 | 2.4 |
| Aerosil 200 | 0.1 | 0.1 | 0.1 | 0.1 | 0.1 |
| Daminozide | 24.6 | 24.6 | 24.6 | 24.6 | 24.6 |
| Atlas G1096 | 10.0 | 10.0 | 10.0 | 5.0 | 5.0 |
| Aerosil OT- 75 | | 10.0 | 5.0 | 5.0 | 10.0 |
| Rhodafac MB | 10.0 | | 5.0 | 10.0 | 5.0 |
| **Sum (wt %)** | **100.0** | **100.0** | **100.0** | **100.0** | **100.0** |
| Separation after 2 hours | NS | NS | NS | NS | 1 ml C |
| DI water, 30 °C | | | | | |
| Separation after 24 hours | 2mlC | 1 ml C | 3 ml C | 3mlC | 1 ml C |
| DI water, 30 °C | | 1 ml O | | | 1 ml O |

| | | | | | |
|---|---|---|---|---|---|
| NS = No separation, C = creamy layer, O = oily layer | | | | | |

**Table H Dual dispersant systems in corn oil with Agrimer AL22 and Atlox LP-1 in combination with a 2 or 3 way emulsifier systems: effect on dilution stability.**

| **Samples** | **H1** | **H2** | **H3** | **H4** | **H5** | **H6** | **H7** | **H8** | **H9** | **H10** |
|---|---|---|---|---|---|---|---|---|---|---|
| Corn oil | 46.6 | 49.5 | 51.2 | 50.5 | 50.5 | 50.5 | 50.5 | 50.5 | 42.1 | 50.7 |
| Agrimer AL22 | 2.2 | 2.3 | 2.4 | 2.4 | 2.4 | 2.4 | 2.4 | 2.4 | 2.0 | 2.4 |
| Atlox LP-1 | 2.2 | 2.3 | 2.4 | 2.4 | 2.4 | 2.4 | 2.4 | 2.4 | 2.0 | 2.4 |
| Aerosil 200 | 0.1 | 0.1 | 0.1 | 0.1 | 0.1 | 0.1 | 0.1 | 0.1 | 0.1 | 0.1 |
| Daminozide | 22.6 | 24.0 | 24.9 | 24.6 | 24.6 | 24.6 | 24.6 | 24.6 | 20.5 | 24.6 |
| Atlas G1096 | 18.4 | 19.6 | 13.8 | | | | | | | |
| Rhodafac MB | 7.8 | 2.2 | | | | | | | | 2.5 |
| Genapol X080 | | | 2.5 | 15.0 | 10.0 | 10.0 | 5.0 | 2.5 | 8.3 | 2.5 |
| Arlatone TV | | | | | | 5.0 | 10.0 | 15.0 | 16.7 | 14.8 |
| Rhodacal 70/B | | | 2.5 | 5.0 | 10.0 | 5.0 | 5.0 | 2.5 | 8.3 | |
| **Sum (wt %)** | **100.0** | **100.0** | **100.0** | **100.0** | **100.0** | **100.0** | **100.0** | **100.0** | **100.0** | **100.0** |
| Separation after 2 hours, DI water, RT | X | X | NS | X | X | X | NS | NS | X | NS |
| Separation after 2 hours, DI water, 30 °C | 1 ml C | 1 ml C | NS | 0.2 ml C | 0.2 ml C | 0.2 ml C | NS | NS | NS | NS |
| Separation after 24 hours, DI water, RT | X | X | 3mlC | X | X | X | 3mlC | 3mlC | X | 3mlC |
| Separation after 24 hours, DI water, 30 °C | D | D | 3mlC | D | D | D | 3mlC | 3mlC | 1 ml C | 3 ml C |

| | | | | | | | | | | |
|---|---|---|---|---|---|---|---|---|---|---|
| NS = no separation, C = creamy layer D = discontinued, RT = room (ambient) temperature, X = not carried out | | | | | | | | | | |

**Table I Dual dispersant systems in corn oil with Agrimer AL22 and Atlox LP-1 in combination with a 2 or 3 way emulsifier system and stabilizer: effect on dilution stability**

| **Samples** | **I1** | **I2** | **I3** |
|---|---|---|---|
| Corn oil | 49.4 | 49.5 | 37.2 |
| MRSO | | | 25.0 |
| Agrimer AL22 | 2.3 | 2.4 | 1.8 |
| Atlox LP-1 | 2.3 | 2.4 | 1.8 |
| Aerosil 200 | 0.1 | 0.1 | 0.1 |
| Daminozide | 24.0 | 24.1 | 18.1 |
| Genapol X080 | 2.5 | | |
| Arlatone TV | 14.4 | 14.7 | 11.0 |
| Rhodafac MB | 2.5 | 4.9 | 3.7 |
| Ethylan NS 500 | 2.5 | 2.0 | 1.5 |
| **Sum (wt %)** | **100.0** | **100.0** | **100.0** |
| **Separation after 30 min** | NS | NS | x |
| DI water, ambient temperature | | | |
| **Separation after 2 hours** | NS | NS | x |
| DI water, ambient temperature | | | |
| **Separation after 24 hours** | 1 ml C | 1 ml C | 3 ml C after 60 h |
| DI water, ambient temperature | | | |

| | | | |
|---|---|---|---|
| x = not tested, C = cream layer, NS = no separation | | | |

**Table X Various dual dispersant millbases**

| **Samples** | **X1** | **X2** | **X3** |
|---|---|---|---|
| Corn oil | 63.20 | 49.46 | 49.40 |
| Agrimer AL22 | 3.00 | 2.35 | 2.35 |
| Atlox LP-1 | 3.00 | 2.35 | 2.35 |
| Daminozide | 30.70 | 24.04 | 24.00 |
| Arlatone TV | | 14.68 | 14.66 |
| Rhodafac MB | | 4.89 | 4.89 |
| Ethylan NS 500 | | 2.00 | 1.99 |
| Aerosil 200 | 0.10 | 0.08 | 0.08 |
| Bentone 1000 | | 0.15 | 0.30 |
| **Sum (wt %)** | **100.00** | **100.00** | **100.00** |
| Viscosity @ 100 sec⁻¹ (mPas) | x | 350 | 155 |
| Casson Yield (mPas) | x | 1175 | 1150 |

| | | | |
|---|---|---|---|
| x = not measured | | | |

**Table J Dual dispersant systems in corn oil with Agrimer AL22 and Atlox LP-1 in combination with a 2 way emulsifier system, a stabilizer and thickeners: effect of wt% clay on viscosity and Casson Yield.**

| **Samples** | **J1** | **J2** | **J3** | **J4** | **J5** | **J6** |
|---|---|---|---|---|---|---|
| Corn oil | 49.31 | 49.18 | 48.98 | 33.05 | 32.95 | 33.52 |
| MRSO | | | | 22.23 | 22.16 | 22.55 |
| Agrimer AL22 | 2.35 | 2.33 | 2.32 | 1.57 | 1.57 | 1.59 |
| Atlox LP-1 | 2.35 | 2.33 | 2.32 | 1.57 | 1.57 | 1.59 |
| Daminozide | 24.04 | 23.89 | 23.80 | 24.46 | 24.39 | 24.81 |
| Arlatone TV | 14.64 | 14.59 | 14.53 | 9.78 | 9.75 | 9.95 |
| Rhodafac MB | 4.88 | 4.86 | 4.84 | 4.78 | 4.77 | 3.32 |
| Ethylan NS 500 | 1.99 | 1.99 | 1.98 | 1.95 | 1.95 | 1.35 |
| Aerosil 200 | 0.08 | 0.08 | 0.08 | 0.05 | 0.05 | 0.05 |
| Bentone 1000 | 0.15 | 0.15 | 0.15 | 0.26 | 0.26 | 0.27 |
| Aerosil R972 | 0.30 | 0.60 | 1.00 | 0.29 | 0.58 | 1.00 |
| **Sum (wt%)** | **100.00** | **100.00** | **100.00** | **100.00** | **100.00** | **100.00** |
| Viscosity @ 100 sec⁻¹ (mPas) | 325 | 365 | 352 | 150 | 180 | 200 |
| Casson Yield (mPas) | 1150 | 1350 | 1460 | 1050 | 1350 | 1460 |

**Table K1 Various phys/chemical properties of J3 and J6 made at pilot scale**

| **Sample** | **Particle Size** | **Casson Yield** | **Viscosity** | **Density** | **Water content** |
|---|---|---|---|---|---|
| | **Laser diffraction (D50)** | **mPas** | **100 sec⁻¹** | **g/ml** | **Karl Fisher (%)** |
| **J3** | < 2.5 µm | 1501 | 359 | 1.017 | 0.38 |
| **J6** | < 2.5 µm | 1497 | 198 | 1.020 | 0.21 |

**Table K2 UDMH and NDMA levels in dual dispersant systems J3 and J6 after 2 weeks' storage at 54°C.**

| **Samples** | **UDMH Initial (ppm)** | **UDMH 2 weeks 54°C (ppm)** | **NDMA Initial (ppm)** | **NDMA 2 weeks 54°C (ppm)** |
|---|---|---|---|---|
| **J3** | 16.5 | 25.6 | 0.0 | 0.3 |
| **J6** | 5.0 | 10.7 | 0.0 | 0.6 |

## Claims

1. A dispersion of particulate daminozide in an aprotic organic liquid, **characterised in that** the dispersion comprises a dispersant system comprising a poly(hydroxy fatty acid) and an alkylated N-vinylpyrrolidinone polymer.

2. The dispersion of claim 1, which comprises less than about 2.0 wt% water based on the weight of the dispersion.

3. The dispersion of claim 1 or claim 2 wherein the aprotic liquid comprises a vegetable oil.

4. The dispersion of any one of claims 1 to 3 wherein the poly(hydroxyfatty acid) is a polymer of a C₁₂₋₂₆monohydroxy carboxylic acid, which may be either saturated or unsaturated.

5. The dispersion of any one preceding claim wherein the poly(hydroxyfatty acid) is poly(12-hydroxyoctadecanoic acid) octadecanoate.

6. The dispersion of any one preceding claim wherein the alkylated N-vinylpyrrolidinone polymer is a copolymer of N-vinyl-2-pyrrolidone and a monoalkene, wherein the stoichiometric proportions of N-vinyl-2-pyrrolidone and the monoalkene from which the alkylated N-vinylpyrrolidinone polymer is made are between about 20:80 and about 30:70.

7. The dispersion of any one preceding claim wherein the ratio of the respective weights of the poly(hydroxyfatty acid) and alkylated N-vinylpyrrolidinone copolymer components in the dispersion is between about 1:2 and about 2.5:1.

8. The dispersion of any one preceding claim further comprising an emulsifier system consisting of one or more emulsifiers other than a poly(hydroxyfatty acid) or an alkylated N-vinylpyrrolidinone copolymer.

9. The dispersion of claim 8 wherein the emulsifier system comprises one or more of the following emulsifiers:
(a) polyethoxylated sorbitans, esterified with fatty acids;
(b) polyethylene glycol monoalkyl ethers;
(c) salts of alkylarylsulfonic acids having a straight or branched alkyl chain;
(d) polyoxyethylene phosphates; and
(e) dioctyl sodium sulfosuccinate.

10. The dispersion of any one preceding claim, further comprising a mono C₂₋₆alkyl ether of a polyC₂₋₄alkylene oxide block copolymer having at least a first polyalkylene oxide block region and a second polyalkylene oxide block region in which the polyalkylene oxide in the first region is different to that in the second region.

11. A method of preparing a dispersion as defined in any one of claims 1 to 10 comprising providing a first population of daminozide particles, having a median particle diameter, and reducing the median particle diameter of the first population to form a second population of daminozide particles, the second population of daminozide particles being the particulate daminozide of the dispersion.

12. A method comprising contacting a dispersion as defined in any one of claims 1 to 10, or obtained in accordance with claim 11, with water.

13. A mixture comprising water and a dispersion as defined in any one of claims 1 to 10, or obtained in accordance with claim 11.

14. A method comprising applying to a plant a mixture as defined in claim 13.

15. Use of a first mixture, which is a mixture in accordance with claim 13, to regulate plant growth in comparison with plant growth achievable with use of the same volume of a second mixture, the second mixture comprising the same concentration of daminozide as the first mixture, but made by mixing daminozide granules with water.

## Patentansprüche

1. Dispersion von teilchenförmigem Daminozid in einer aprotischen organischen Flüssigkeit, **dadurch gekennzeichnet, dass** die Dispersion ein Dispergiermittelsystem umfasst, das eine Poly(hydroxyfettsäure) und ein alkyliertes N-Vinylpyrrolidinonpolymer umfasst.

2. Dispersion nach Anspruch 1, die weniger als etwa 2,0 Gew.-% Wasser, auf das Gewicht der Dispersion bezogen, umfasst.

3. Dispersion nach Anspruch 1 oder Anspruch 2, wobei die aprotische Flüssigkeit ein Pflanzenöl umfasst.

4. Dispersion nach einem der Ansprüche 1 bis 3, wobei die Poly(hydroxyfettsäure) ein Polymer einer C₁₂₋₂₆-Monohydroxycarbonsäure ist, die entweder gesättigt oder ungesättigt sein kann.

5. Dispersion nach einem vorhergehenden Anspruch, wobei die Poly(hydroxyfettsäure) Poly(12-hydroxyoctadecansäure)octadecanoat ist.

6. Dispersion nach einem vorhergehenden Anspruch, wobei das alkylierte N-Vinylpyrrolidinonpolymer ein Copolymer von N-Vinyl-2-pyrrolidon und einem Monoalken ist, wobei die stöchiometrischen Verhältnisse von N-Vinyl-2-pyrrolidon und dem Monoalken, aus dem das alkylierte N-Vinylpyrrolidinonpolymer hergestellt wird, zwischen etwa 20:80 und etwa 30:70 liegen.

7. Dispersion nach einem vorhergehenden Anspruch, wobei das Verhältnis der jeweiligen Gewichte der Poly(hydroxyfettsäure)- und alkylierten N-Vinylpyrrolidinoncopolymer-Komponenten in der Dispersion zwischen etwa 1:2 und etwa 2,5:1 liegt.

8. Dispersion nach einem vorhergehenden Anspruch, die ferner ein Emulatorsystem umfasst, das aus einem oder mehreren Emulgatoren außer einer Poly(hydroxyfettsäure) oder einem alkylierten N-Vinylpyrrolidinoncopolymer besteht.

9. Dispersion nach Anspruch 8, wobei das Emulgatorsystem einen oder mehrere der folgenden Emulgatoren umfasst:
(a) polyethoxylierte Sorbitane, die mit Fettsäuren verestert sind;
(b) Polyethylenglykolmonoalkylether;
(c) Salze von Alkylarylsulfonsäuren, die eine gerade oder verzweigte Alkylkette aufweisen;
(d) Polyoxyethylenphosphate; und
(e) Dioctylnatriumsulfosuccinat.

10. Dispersion nach einem vorhergehenden Anspruch, ferner einen Mono-C₂₋₆-Alkylether eines Poly-C₂₋₄-alkylenoxid-Blockcopolymers umfassend, das mindestens eine erste Polyalkylenoxid-Blockregion und eine zweite Polyalkylenoxid-Blockregion aufweist, wobei das Polyalkylenoxid in der ersten Region von demjenigen in der zweiten Region verschieden ist.

11. Verfahren für die Herstellung einer Dispersion wie in einem der Ansprüche 1 bis 10 definiert, umfassend Bereitstellen einer ersten Population von Daminozidteilchen, die einen mittleren Teilchendurchmesser aufweisen, und Reduzieren des mittleren Teilchendurchmessers der ersten Population, um eine zweite Population von Daminozidteilchen zu bilden, wobei die zweite Population von Daminozidteilchen das teilchenförmige Daminozid der Dispersion ist.

12. Verfahren umfassend das Kontaktieren einer Dispersion, wie in einem der Ansprüche 1 bis 10 definiert, oder Anspruch 11 entsprechend erhalten, mit Wasser.

13. Mischung umfassend Wasser und eine Dispersion wie in einem der Ansprüche 1 bis 10 definiert, oder Anspruch 11 entsprechend erhalten.

14. Verfahren umfassend das Aufbringen, auf eine Pflanze, einer Mischung wie in Anspruch 13 definiert.

15. Verwendung einer ersten Mischung, die eine Mischung Anspruch 13 entsprechend ist, zum Regulieren von Pflanzenwachstum im Vergleich mit Pflanzenwachstum, das durch Verwendung desselben Volumens einer zweiten Mischung erreichbar ist, wobei die zweite Mischung dieselbe Konzentration von Daminozid wie die erste Mischung umfasst, jedoch durch Mischen von Daminozidgranulaten mit Wasser hergestellt wird.

## Revendications

1. Dispersion de daminozide sous forme de particules dans un liquide organique aprotique, **caractérisée en ce que** la dispersion comprend un système dispersant comprenant un poly(acide hydroxy gras) et un polymère de N-vinylpyrrolidinone alkylée.

2. Dispersion selon la revendication 1, qui comprend moins d'environ 2,0 % en pds d'eau sur la base du poids de la dispersion.

3. Dispersion selon la revendication 1 ou la revendication 2, dans laquelle le liquide aprotique comprend une huile végétale.

4. Dispersion selon l'une quelconque des revendications 1 à 3, dans laquelle le poly(acide hydroxy gras) est un polymère d'un acide monohydroxy carboxylique en C₁₂ à C₂₆, qui peut être soit saturé soit insaturé.

5. Dispersion selon l'une quelconque des revendications précédentes, dans laquelle le poly(acide hydroxy gras) est l'octadécanoate de poly(acide 12-hydroxyoctadécanoïque).

6. Dispersion selon l'une quelconque des revendications précédentes, dans laquelle le polymère de N-vinylpyrrolidinone alkylée est un copolymère de N-vinyl-2-pyrrolidone et d'un monoalcène, dans lequel les proportions stœchiométriques de la N-vinyl-2-pyrrolidone et du monoalcène à partir duquel le polymère de N-vinylpyrrolidinone alkylée est fabriqué sont comprises entre environ 20:80 et environ 30:70.

7. Dispersion selon l'une quelconque des revendications précédentes dans laquelle le rapport des poids respectifs des composants copolymère de poly(acide hydroxy gras) et N-vinylpyrrolidinone alkylée dans la dispersion est compris entre environ 1:2 et environ 2,5:1.

8. Dispersion selon l'une quelconque des revendications précédentes comprenant en outre un système émulsifiant constitué d'un ou plusieurs émulsifiants autres qu'un poly(acide hydroxy gras) ou un copolymère de N-vinylpyrrolidinone alkylée.

9. Dispersion selon la revendication 8, dans laquelle le système émulsifiant comprend un ou plusieurs des émulsifiants suivants:
(a) les sorbitans polyéthoxylés, estérifiés avec des acides gras;
(b) les éthers monoalkyliques de polyéthylène glycol;
(c) les sels d'acides alkylarylsulfoniques ayant une chaîne alkyle linéaire ou ramifiée;
(d) les phosphates de polyoxyéthylène; et
(e) le sulfosuccinate de dioctyl sodium.

10. Dispersion selon l'une quelconque des revendications précédentes, comprenant en outre un monoalkyléther en C₂ à C₆ d'un copolymère séquencé de poly(oxyde d'alcylène) en C₂ à C₄ ayant au moins une première région de séquence de poly(oxyde d'alcylène) et une seconde région de séquence de poly(oxyde d'alcylène), dans laquelle le poly(oxyde d'alcylène) dans la première région est différent de celui dans la seconde région.

11. Procédé de préparation d'une dispersion telle que définie selon l'une quelconque des revendications 1 à 10, comprenant la fourniture d'une première population de particules daminozides, ayant un diamètre moyen de particule, et la réduction du diamètre moyen de particule de la première population pour former une seconde population de particules daminozides, la seconde population de particules daminozides étant le daminozide sous forme de particules de la dispersion.

12. Procédé comprenant la mise en contact d'une dispersion telle que définie selon l'une quelconque des revendications 1 à 10, ou obtenue selon la revendication 11, avec de l'eau.

13. Mélange comprenant de l'eau et une dispersion telle que définie selon l'une quelconque des revendications 1 à 10, ou obtenue selon la revendication 11.

14. Procédé comprenant l'application à une plante d'un mélange tel que défini selon la revendication 13.

15. Utilisation d'un premier mélange, qui est un mélange selon la revendication 13, pour réguler la croissance végétale en comparaison de la croissance végétale pouvant être atteinte avec l'utilisation du même volume d'un second mélange, le second mélange comprenant la même concentration de daminozide que le premier mélange, mais fabriqué en mélangeant des granules de daminozide avec de l'eau.
